# EUROPÄISCHE PATENTSCHRIFT

(11) **EP 4 366 886 B1**
(45) Veröffentlichungstag und Bekanntmachung des Hinweises auf die Patenterteilung: **09.04.2025**
(21) Anmeldenummer: 22740410.0
(22) Anmeldetag: 06.07.2022
(51) Int. Cl.: B05B 7/14, B65G 49/08, B65G 53/28

(54) **PULVERFÖRDERKAMMER FÜR EINE PULVERDICHTSTROMPUMPE SOWIE PULVERDICHTSTROMPUMPE MIT EINER PULVERFÖRDERKAMMER**
POWDER FEED CHAMBER FOR A DENSE-PHASE POWDER PUMP, AND DENSE-PHASE POWDER PUMP COMPRISING A POWDER FEED CHAMBER
CHAMBRE D'ALIMENTATIONP EN POUDRE POUR UNE POMPE À POUDRE EN PHASE DENSE, ET POMPE À POUDRE EN PHASE DENSE AYANT UNE CHAMBRE D'ALIMENTATIONP EN POUDRE

(30) Priorität: 09.07.2021 DE 102021117798
(43) Veröffentlichungstag der Anmeldung: 15.05.2024
(73) Patentinhaber: Gema Switzerland GmbH, 9200 Gossau (CH)
(72) Erfinder: SANWALD, Marco, 9030 Abtwil (CH); MICHAEL, Hanspeter, 9200 Gossau (CH); SUTTER, Erich, 9015 St. Gallen (CH)
(74) Vertreter: Meissner Bolte Partnerschaft mbB
(86) Internationale Anmeldenummer: PCT/EP2022/068781
(87) Internationale Veröffentlichungsnummer: WO 2023/280939

(56) Entgegenhaltungen:
- EP-A2- 1 857 384
- EP-A2- 2 190 588
- DE-A1- 102011 004 352
- DE-A1- 102013 211 550
- DE-A1- 102017 103 487
- DE-B3- 102005 006 522

## Beschreibung

Die vorliegende Erfindung betrifft eine Pulverförderkammer für eine Pulverdichtstrompumpe nach dem Oberbegriff des unabhängigen Patentanspruches 1.

Demgemäß betrifft die Erfindung eine Pulverförderkammer für eine Pulverdichtstrompumpe zum Fördern von Pulver, insbesondere Beschichtungspulver, wobei die Pulverförderkammer mindestens eine Luftaustauschöffnung aufweist, welche insbesondere separat von einem Spülluftauslass des Endbereichs ausgeführt und ausgebildet ist, wechselweise mit einer Vakuumleitung bzw. Vakuumquelle oder mit einer Druckluftversorgungsleitung bzw. Druckluftquelle strömungsmäßig verbunden zu werden zum Einsaugen von Pulver in die Pulverförderkammer bzw. zum pneumatischen Ausstoßen einer in der Pulverförderkammer vorhandenen Pulverportion, wobei die Pulverförderkammer einen Endbereich aufweist, über den die Pulverförderkammer strömungsmäßig mit einer Pulverleitung verbunden oder verbindbar ist, wobei der Endbereich der Pulverförderkammer als Übergangsbereich ausgeführt und ausgebildet ist, einen effektiven Strömungsquerschnitt der Pulverförderkammer auf einen effektiven Strömungsquerschnitt der Pulverleitung und/oder auf einen effektiven Strömungsquerschnitt eines zwischen der Pulverförderkammer und der Pulverleitung angeordneten Ventils, insbesondere Quetschventils, zu reduzieren, wobei dem Endbereich ein Spülsystem zugeordnet ist, über das dem Endbereich insbesondere bedarfsweise Spülluft in Gestalt von Druckluft zuführbar ist, um den Endbereich von Pulverablagerungen freizuhalten oder um Pulverablagerungen am Endbereich zu entfernen.

Die Erfindung betrifft ferner eine Pulverdichtstrompumpe mit mindestens einer solchen Pulverförderkammer.

Die erfindungsgemäße Pulverdichtstrompumpe dient insbesondere zum Fördern von Beschichtungspulver von einem ersten Pulverreservoir zu einem stromabwärts der Pulverdichtstrompumpe angeordneten zweiten Pulverreservoir oder einer stromabwärts der Pulverdichtstrompumpe angeordneten Pulversprühpistole oder dergleichen Einrichtung zum Versprühen von Beschichtungspulver. Pulverdichtstrompumpen (Englisch: *dense phase power pumps*) der zuvor genannten Art sind dem Prinzip nach aus dem Stand der Technik bekannt. Beispielsweise betrifft die EP 1 551 558 A1 eine Pulverdichtstrompumpe, welche eine erste Pulverförderkammer und eine parallel zur ersten Pulverförderkammer angeordnete zweite Pulverförderkammer aufweist. Die beiden Pulverförderkammern der aus diesem Stand der Technik bekannten Pulverdichtstrompumpe sind sowohl ansaugseitig als auch förderseitig jeweils durch eine mechanisch betätigte Quetschventilanordnung begrenzt.

Im Einzelnen ist dabei vorgesehen, dass im ansaugseitigen bzw. förderseitigen Bereich der Pulverdichtstrompumpe die mit den jeweiligen Pulverförderkammern der Pulverdichtstrompumpe verbundenen Pulverschläuche mit einem mechanisch betätigten Stempel deformierbar sind, um den Schlauchabschnitt bei Bedarf abzuquetschen bzw. zu öffnen. Die beiden zueinander parallel angeordneten Pulverförderkammern werden wechselphasig betrieben, was bedeutet, dass eine der beiden Pulverförderkammern Beschichtungspulver durch den Pulvereinlass der Pulverdichtstrompumpe ansaugt, während die andere der beiden Pulverförderkammern eine zuvor in die Pulverförderkammer angesaugte Beschichtungspulverportion über den Pulverauslass der Pulverdichtstrompumpe abgibt.

Pulverdichtstrompumpen mit mehreren, insbesondere zwei, parallel zueinander geschalteten Pulverförderkammern sind auch aus der DE 10 2013 211550 A1, der WO 2005/005060 A2 (US 2006/0193704 A1), der DE 199 59 473 A1 (US 2001/0003568 A1) und der EP 1 752 399 A1 bekannt.

Die Verwendung von Pulverdichtstrompumpen zur Förderung von Beschichtungspulver zu entsprechenden Einrichtungen zum Versprühen von Beschichtungspulver, wie insbesondere Pulversprühbeschichtungspistolen, ist aus der DE 196 11 533 B4, der WO 2004/087331 A1 und der EP 1 566 352 A2) bekannt. Bevor die Verwendung von Pulverdichtstrompumpen zur Förderung von Beschichtungspulver bekannt wurde, wurden als Injektoren ausgebildete Pulverpumpen verwendet, welche auch heute noch zur Förderung von Beschichtungspulver eingesetzt werden. Im Unterschied zu Pulverdichtstrompumpen weisen jedoch als Injektoren ausgebildete Pulverpumpen, die auch als "Pulverdünnstrompumpen" bezeichnet werden, den Nachteil auf, dass diese Pulverpumpen üblicherweise nur eine relativ geringe Menge an Beschichtungspulver pro Zeiteinheit fördern können.

Insofern haben sich Pulverdichtstrompumpen in der Praxis insbesondere für solche Anwendungen durchgesetzt, bei denen eine relativ große Menge an Beschichtungspulver pro Zeiteinheit zu fördern ist.

Im praktischen Gebrauch hat sich jedoch gezeigt, dass eine Pulverdichtstrompumpe, wie sie beispielsweise aus der EP 1 551 558 A1 bekannt ist, insbesondere bei manchen Pulverarten Probleme bei der kontinuierlichen Pulverförderung zeigt bzw. verhältnismäßig häufig gewartet werden muss.

Durch die Erfindung soll die Aufgabe gelöst werden, im Pulver-Fördermodus einer Pulverdichtstrompumpe der zuvor genannten Art auf einfache Weise Pulveransammlungen und Pulververstopfungen insbesondere an der Pulvereinlassseite der Pulverförderkammer der Pulverdichtstrompumpe und/oder an der Pulverauslassseite der Pulverförderkammer zu vermeiden oder zumindest zu reduzieren. Dies soll insbesondere auch für solche Pulverarten gelten, die bei der Förderung zu Verklumpungen und/oder Anhaftungen neigen.

Insbesondere soll eine Pulverdichtstrompumpe der zuvor genannten Art dahingehend weitergebildet werden, dass diese im Betrieb weniger wartungsanfällig ist und insbesondere unabhängig von der Pulverart, eine kontinuierliche und gleichmäßige Pulverförderung gewährleistet.

Diese Aufgabe wird erfindungsgemäß durch den Gegenstand des unabhängigen Patentanspruches 1 gelöst.

Demnach betrifft die Erfindung insbesondere eine Pulverförderkammer für eine Pulverdichtstrompumpe zum Fördern von Pulver, insbesondere Beschichtungspulver, wobei die Pulverförderkammer einen Endbereich aufweist, über den die Pulverförderkammer strömungsmäßig ggf. über ein Ventil, insbesondere Quetschventil, mit einer Pulverleitung verbunden oder verbindbar ist. Der Endbereich der Pulverförderkammer ist als Übergangsbereich ausgeführt und ausgebildet, einen effektiven Strömungsquerschnitt der Pulverförderkammer auf einen effektiven Strömungsquerschnitt des Ventils im geöffneten Zustand bzw. auf einen effektiven Strömungsquerschnitt der Pulverleitung zu reduzieren.

Erfindungsgemäß ist vorgesehen, dass ein den Endbereich der Pulverförderkammer ausbildender Wandbereich des Endbereichs zumindest bereichsweise als ein für Druckluft durchlässiger, aber für Pulver undurchlässiger, poröser Wandbereich ausgebildet ist.

Durch das Vorsehen eines derartigen Endbereich-Spülsystems können effektiv störende und somit unerwünschte Pulveransammlungen (Pulveraggregation) und eine potentiell damit einhergehende Pulververstopfung im Pulver-Fördermodus der Pulverdichtstrompumpe beim Pulvereinlass und/oder Pulverauslass der Pulverförderkammer wirksam verhindert werden.

Im Einzelnen kann mit Hilfe des Spülsystems während der Ausstoßphase der Pulverdichtstrompumpe, und insbesondere am Ende der Ausstoßphase, oder während eines Reinigungszyklus der Pulverdichtstrompumpe eine Reinigung des entsprechenden Endbereiches und insbesondere des Ansaug- und Ausstoßbereiches der Pulverförderkammer erfolgen.

Wenn beispielsweise beim Ausstoßzyklus der Pulverdichtstrompumpe zusätzlich zu der Transportdruckluft, die in die Pulverförderkammer eingeleitet wird (durch Anlegen eines entsprechenden Überdrucks an der Pulverförderkammer), Spülluft in die Endbereiche der Pulverförderkammer eingeleitet wird, erfolgt eine wirksame Durchspülung der Endbereiche der Pulverförderkammer. Damit wird eine Pulveraggregation und damit einhergehende Verstopfung optimal vermieden oder zumindest reduziert.

Zur Realisierung der Endbereich-Spülung kommen verschiedene Ansätze in Frage.

Gemäß bevorzugten Ausführungsformen ist vorgesehen, dass der Endbereich der Pulverförderkammer, welcher insbesondere zumindest bereichsweise konusförmig ausgeführt ist, bereichsweise als Filter ausgeführt ist, der den Umfang des Endbereiches entsprechend begrenzt. Der Filter ist für Luft, jedoch nicht für Beschichtungspulver durchlässig und von einer Ringkammer umgeben, an die bedarfsweise Druckluft anschließbar ist.

Insbesondere ist gemäß Realisierungen der erfindungsgemäßen Lösung vorgesehen, dass dem Spülsystem eine Steuereinrichtung zugeordnet ist, welche ausgebildet ist, bedarfsweise mindestens einen Spülluftauslass des Endbereiches der Pulverförderkammer mit einer Druckluftversorgungsleitung oder einer Druckluftquelle strömungsmäßig zu verbinden. Die Steuereinrichtung ist insbesondere ausgebildet, in einem Reinigungsbetrieb den mindestens einen Spülluftauslass des Endbereiches der Pulverförderkammer mit der Druckluftversorgungsleitung oder der Druckluftquelle strömungsmäßig zu verbinden.

Alternativ oder zusätzlich hierzu ist die Steuereinrichtung ausgebildet, in einem Pulverausstoßzyklus der Pulverförderkammer den mindestens einen Spülluftauslass des Endbereiches der Pulverförderkammer mit der Druckluftversorgungsleitung bzw. der Druckluftquelle strömungsmäßig zu verbinden.

Gemäß Weiterbildungen der zuletzt genannten Ausführungsformen ist vorgesehen, dass die Steuereinrichtung ausgebildet ist, insbesondere abhängig von einem Betriebszustand und/oder von einem Betriebszyklus der Pulverförderkammer, die pro Zeiteinheit dem mindestens einen Spülluftauslass des Endbereiches der Pulverförderkammer zuzuführende Menge an Druckluft einzustellen. Hierbei bietet es sich an, dass die Steuereinrichtung ausgebildet ist, in einem Reinigungsbetrieb dem mindestens einen Spülluftauslass des Endbereiches der Pulverförderkammer pro Zeiteinheit eine höhere Menge an Druckluft zuzuführen, im Vergleich zu der pro Zeiteinheit dem mindestens einen Spülluftauslass im Pulverausstoßbetrieb zugeführten Menge an Druckluft.

Gemäß Ausführungsformen der erfindungsgemäßen Pulverförderkammer ist vorgesehen, dass der Endbereich der Pulverförderkammer über ein Ventil, insbesondere Quetschventil, strömungsmäßig mit der Pulverleitung verbunden oder verbindbar ist, wobei das Ventil, insbesondere Quetschventil, in seinem geöffneten Zustand einen effektiven Strömungsquerschnitt aufweist. Dabei bietet es sich an, dass der Endbereich der Pulverförderkammer ausgebildet ist, einen effektiven Strömungsquerschnitt der Pulverförderkammer auf den effektiven Strömungsquerschnitt des Ventils, insbesondere Quetschventils, in seinem geöffneten Zustand zu reduzieren.

Wie auch der Endbereich der Pulverförderkammer sollte die Pulverförderkammer selber bzw. ein Hauptkörperbereich der Pulverförderkammer mindestens eine Luftaustauschöffnung aufweisen, welche insbesondere separat von einem Spülluftauslass des Endbereiches ausgeführt und ausgebildet ist, wechselweise mit einer Vakuumleitung bzw. Vakuumquelle oder mit einer Druckluftversorgungsleitung bzw. Druckluftquelle strömungsmäßig verbunden zu werden, zum Einsaugen von Pulver in die Pulverförderkammer bzw. zum pneumatischen Ausstoßen einer in der Pulverförderkammer vorhandenen und zuvor eingesaugten Pulverportion.

Gemäß Ausführungsformen der vorliegenden Erfindung weist die Pulverförderkammer einen ersten Endbereich und einen gegenüberliegenden zweiten Endbereich auf, wobei die Pulverförderkammer über den ersten Endbereich strömungsmäßig mit einer ersten Pulverleitung und über den zweiten Endbereich strömungsmäßig mit einer zweiten Pulverleitung verbunden oder verbindbar ist. Dabei ist der erste und/oder zweite Endbereich der Pulverförderkammer jeweils als Übergangsbereich ausgeführt und ausgebildet, einen effektiven Strömungsquerschnitt der Pulverförderkammer auf einen effektiven Strömungsquerschnitt der entsprechenden Pulverleitung zu reduzieren. Insbesondere ist bei dieser Weiterbildung vorgesehen, dass sowohl dem ersten als auch dem zweiten Endbereich jeweils ein Spülsystem zugeordnet ist, über das dem jeweiligen Endbereich insbesondere bedarfsweise Spülluft in Gestalt von Druckluft zuführbar ist, um den entsprechenden Endbereich von Pulverablagerungen freizuhalten oder um Pulverablagerungen am Endbereich zu entfernen.

Vorzugsweise an beiden Endbereichen der Pulverförderkammer verkleinert sich der Durchmesser, was eine Querschnittsverkleinerung und folglich, bedingt durch wechselnde Material-Geschwindigkeiten, in Turbulenzen, aber auch in Erhöhung von Stoßwirkungen (Impact) endet, was schließlich Pulverablagerungen an den konischen Flächen nach sich ziehen kann. Diese lassen sich am Eingangsbereich der Pulverförderkammer vermehrt beobachten. Um dem entgegenzuwirken, sind die Endbereiche der Pulverförderkammer mit einem entsprechenden Spülsystem versehen. Die Endbereiche der Pulverförderkammer können insbesondere als separate, d.h. austauschbare Endstücke ausgebildet sein, die zumindest bereichsweise aus porösem Material bestehen und mit Druckluft beaufschlagbar sind, so dass auf der innenwandigen Konusfläche der Endstücke eine Luftspülung stattfindet.

Gemäß Ausführungsformen der Erfindung weist das Spülsystem ein zumindest bereichsweise sich insbesondere konisch verjüngendes Filterelement auf, welches für Luft, aber nicht für Pulver durchlässig ist. Das konusförmige Filterelement begrenzt den Umfang der Pulverförderkammer an ihrem Endbereich. Das Filterelement ist von einer Ringkammer, die von einem Filtergehäuse gebildet wird, umgeben, wobei an die Ringkammer bedarfsweise Druckluft anschließbar ist.

Das Filterelement ist mit seinem im Hinblick auf den Durchmesser größeren Endbereich mit einem Endbereich eines insbesondere zylinderförmigen Hauptkörperbereichs der Pulverförderkammer vorzugsweise lösbar verbunden oder verbindbar. Andererseits ist das Filterelement mit seinem im Hinblick auf den Durchmesser kleineren Endbereich mit einem Endbereich der Pulverleitung oder mit einem Endbereich eines zwischen der Pulverförderkammer und der Pulverförderleitung angeordneten Ventils, insbesondere Quetschventils, vorzugsweise lösbar verbunden oder verbindbar.

Die Erfindung betrifft ferner ein Spülsystem für den Endbereich einer Pulverförderkammer, insbesondere einer Pulverförderkammer der zuvor genannten erfindungsgemäßen Art. Das Spülsystem ist ausgebildet, insbesondere bedarfsweise dem Endbereich der Pulverförderkammer Spülluft in Gestalt von Druckluft zuzuführen, um den Endbereich von Pulverablagerungen freizuhalten oder um Pulverablagerungen am Endbereich zu entfernen.

Die Erfindung betrifft ferner eine Pulverdichtstrompumpe zum Fördern von Beschichtungspulver von einem ersten Pulverreservoir zu einem zweiten stromabwärts angeordneten Pulverreservoir oder einer stromabwärts angeordneten Pulversprühbeschichtungspistole oder dergleichen Einrichtung zum Versprühen von Beschichtungspulver. Die Pulverdichtstrompumpe weist mindestens eine Pulverförderkammer der zuvor genannten erfindungsgemäßen Art auf, welche über einen Pulvereinlass mit dem ersten Pulverreservoir und über einen Pulverauslass mit dem zweiten Pulverreservoir bzw. mit der Pulversprühbeschichtungspistole oder dergleichen Einrichtung zum Versprühen von Beschichtungspulver strömungsmäßig verbunden oder verbindbar ist. Am Pulvereinlass der Pulverdichtstrompumpe sowie am Pulverauslass der Pulverdichtstrompumpe ist jeweils ein Einlass- bzw. Auslassventil vorgesehen.

In bevorzugten Ausführungsformen der erfindungsgemäßen Pulverdichtstrompumpe ist vorgesehen, dass insbesondere das Pulvereinlassventil im Vergleich zu dem Pulverauslassventil entsprechend überdimensional ausgeführt ist. Dieser Ausführungsform liegt die Erkenntnis zugrunde, dass das Pulvereinlassventil der Pulverdichtstrompumpe maßgeblich ausschlaggebend für die Regulierung des von der Pulverdichtstrompumpe pro Zeiteinheit tatsächlich förderbaren Pulverstroms ist. Insofern ist gemäß Ausführungsformen der erfindungsgemäßen Pulverdichtstrompumpe vorgesehen, dass im geöffneten Zustand des mindestens einen Pulvereinlassventils dieses einen effektiven Strömungsquerschnitt aufweist, welcher größer ist als ein effektiver Strömungsquerschnitt des Pulverauslassventils in seinem geöffneten Zustand.

Alternativ hierzu ist bei Ausführungsformen der erfindungsgemäßen Pulverdichtstrompumpe vorgesehen, dass das mindestens eine Pulvereinlassventil und das mindestens eine Pulverauslassventil im jeweils geöffneten Zustand einen zumindest im Wesentlichen gleichen effektiven Strömungsquerschnitt aufweisen. Diese Ausführungsform hat den Vorteil, dass für das mindestens eine Pulvereinlassventil und das mindestens eine Pulverauslassventil baugleiche Ventile verwendet werden können, was Vorteile im Hinblick auf Wartung und Bevorratung von Ersatzteilen mit sich bringt.

Erfindungsgemäß weist die Pulverdichtstrompumpe einen mit dem (stromaufwärts liegenden) ersten Pulverreservoir verbundenen oder verbindbaren Pulvereinlass und einen mit dem (stromabwärts liegenden) zweiten Pulverreservoir bzw. mit der (stromabwärts liegenden) Pulversprühbeschichtungspistole oder dergleichen Einrichtung zum Versprühen von Beschichtungspulver verbundenen oder verbindbaren Pulverauslass auf. Dabei können der Pulvereinlass der Pulverdichtstrompumpe an einem ersten Endbereich der Pulverdichtstrompumpe und der Pulverauslass der Pulverdichtstrompumpe an einem gegenüberliegenden zweiten Endbereich der Pulverdichtstrompumpe angeordnet sein, wobei die mindestens eine Pulverförderkammer der Pulverdichtstrompumpe zwischen dem Pulvereinlass und dem Pulverauslass der Pulverdichtstrompumpe angeordnet ist.

Bei einer vorteilhaften Realisierung der vorliegenden Erfindung, weist die mindestens eine Pulverförderkammer der erfindungsgemäßen Pulverdichtstrompumpe an einem ersten Endbereich einen Pulvereinlass mit dem mindestens einen Pulvereinlassventil und an einem gegenüberliegenden zweiten Endbereich einen Pulverauslass mit dem mindestens einen Pulverauslassventil auf. Über das mindestens eine Pulvereinlassventil ist der Pulvereinlass der mindestens einen Pulverförderkammer mit dem Pulvereinlass der Pulverdichtstrompumpe strömungsmäßig verbunden oder verbindbar. Andererseits ist der Pulverauslass der mindestens einen Pulverförderkammer der Pulverdichtstrompumpe über das mindestens eine Pulverauslassventil mit dem Pulverauslass der Pulverdichtstrompumpe strömungsmäßig verbunden oder verbindbar.

Gemäß einem anderen Aspekt der vorliegenden Erfindung weist die Pulverdichtstrompumpe einen mit dem ersten Pulverreservoir verbundenen oder verbindbaren Pulvereinlass und einen mit dem zweiten Pulverreservoir bzw. mit der Pulversprühbeschichtungspistole oder dergleichen Einrichtung zum Versprühen von Beschichtungspulver verbundenen oder verbindbaren Pulverauslass auf, wobei die mindestens eine Pulverförderkammer der erfindungsgemäßen Pulverdichtstrompumpe an einem Endbereich einen Pulverdurchgang aufweist, der sowohl als Pulvereinlass als auch als Pulverauslass für die mindestens eine Pulverförderkammer dient. Gemäß diesem Aspekt der vorliegenden Erfindung ist es von Vorteil, wenn über das mindestens eine Pulvereinlassventil der Pulverdichtstrompumpe der Pulverdurchgang der mindestens einen Pulverförderkammer mit dem Pulvereinlass der Pulverdichtstrompumpe strömungsmäßig verbunden oder verbindbar ist, wobei über das mindestens eine Pulverauslassventil der Pulverdurchgang der mindestens einen Pulverförderkammer mit dem Pulverauslass der Pulverdichtstrompumpe strömungsmäßig verbunden oder verbindbar ist.

Gemäß einer bevorzugten Realisierung ist dabei vorgesehen, dass die Pulverdichtstrompumpe ferner einen Verteiler aufweist, um den Pulverdurchgang der Pulverförderkammer mit dem Pulvereinlassventil einerseits und dem Pulverauslassventil andererseits strömungsmäßig zu verbinden. Denkbar hierbei ist es insbesondere, als Verteiler ein Y-Stück zu verwenden. Selbstverständlich kommen aber auch andere Ausführungsformen hierfür in Frage.

In bevorzugten Ausführungsformen der erfindungsgemäßen Lösung ist ferner eine Steuereinrichtung vorgesehen, welche derart ausgebildet ist, um das mindestens eine Pulvereinlassventil und/oder das mindestens eine Pulverauslassventil der Pulverdichtstrompumpe wechselweise anzusteuern. Die Steuereinrichtung ist vorzugsweise ferner ausgebildet, um abwechselnd einen Überdruck und einen Unterdruck in der mindestens einen Pulverförderkammer der Pulverdichtstrompumpe anzulegen.

Der mindestens einen Pulverförderkammer der Pulverdichtstrompumpe ist vorzugsweise ein Gasweg zugeordnet, durch welchen die entsprechende Pulverförderkammer wechselweise mit einer Vakuumleitung oder Vakuumquelle zum Einsaugen von Beschichtungspulver in die Pulverförderkammer durch das offene Pulvereinlassventil, während das Pulverauslassventil geschlossen ist, oder mit einer Druckluftleitung oder Druckluftquelle zum pneumatischen Ausstoßen einer in der Pulverförderkammer vorhandenen Pulverportion durch das offene Pulverauslassventil, während das Pulvereinlassventil geschlossen ist, verbindbar ist. Die Steuereinrichtung ist dabei ausgebildet, die einzige Pulverförderkammer wechselweise auf Einsaugen und auf Ausstoßen von Pulver umzuschalten.

Bei vorteilhaften Realisierungen der erfindungsgemäßen Pulverdichtstrompumpe weist der zuvor genannte Gasweg eine Saugluftöffnung und eine Druckluftöffnung in einer Gehäuseumfangswand der Pulverförderkammer auf, wobei vorzugsweise ferner ein mikroporöses Filterelement, vorzugsweise in Gestalt eines Filterrohres, vorgesehen ist, welches mindestens auf einer Teillänge oder vorzugsweise der gesamten Länge der Pulverförderkammer die Umfangswand der Pulverförderkammer bildet und die Pulverkammer von einer Ringkammer trennt. Die Ringkammer ist zwischen dem Außenumfang des vorzugsweise als Filterrohr ausgebildeten Filterelements und dem Innenumfang der Gehäuseumfangswand gebildet und umgibt das vorzugsweise als Filterrohr ausgebildete Filterelement. Das vorzugsweise als Filterrohr ausgebildete Filterelement ist für Luft, jedoch nicht für Beschichtungspulver durchlässig aufgrund seiner kleinen Porengröße. Es besteht vorzugsweise aus einem Sintermaterial.

Das mindestens eine Pulvereinlassventil und das mindestens eine Pulverauslassventil der erfindungsgemäßen Pulverdichtstrompumpe sind vorzugsweise jeweils als Quetschventil ausgebildet, insbesondere von der Bauweise, welche einen flexiblen elastischen Schlauch als Ventilkanal aufweisen, wobei dieser flexible elastische Schlauch zum Schließen des entsprechenden Ventils mit Hilfe von Betätigungsdruckluft in einer den Schlauch umgebenden Druckkammer zusammenquetschbar ist.

Insbesondere ist es in diesem Zusammenhang von Vorteil, wenn das als Quetschventil ausgebildete mindestens eine Pulvereinlassventil und das als Quetschventil ausgebildete mindestens eine Pulverauslassventil jeweils ein Quetschventilgehäuse mit einem Pulvereinlass und einem Pulverauslass sowie mit einem elastisch verformbaren Ventilelement, vorzugsweise in Gestalt eines Schlauchabschnittes, aufweist. Insbesondere sollte dabei das Ventilelement im Inneren des Quetschventilgehäuses derart angeordnet sein, dass der Pulvereinlass des Quetschventils mit dem Pulverauslass des Quetschventils über das als Schlauchabschnitt gebildete Ventilelement in Fluidverbindung bringbar ist.

Hierbei ist es von Vorteil, wenn das Quetschventilgehäuse mindestens einen Anschluss aufweist zum bedarfsweisen Zuführung von Druckluft (Betätigungsdruckluft) in den zwischen der Innenwand des Quetschventilgehäuses und dem im Inneren des Quetschventilgehäuses angeordneten Ventilelement gebildeten Raum. Beim Zuführen von Betätigungsdruckluft wird in dem Raum zwischen der Innenwand des Quetschventilgehäuses und dem Ventilelement ein Überdruck gebildet, infolgedessen das Ventilelement in radialer Richtung zusammengedrückt und das Quetschventil geschlossen wird. Wenn anschließend in dem Quetschventilgehäuse eine Druckentlastung erfolgt, geht das Ventilelement wieder in seinen Ausgangszustand über, so dass zwischen dem Pulvereinlass des Quetschventils und dem Auslass des Quetschventils über das Ventilelement eine Fluidverbindung vorliegt.

Gemäß einem Aspekt der Erfindung ist ferner diesbezüglich vorgesehen, dass während der Saugphase der Pulverförderkammer ein Unterdruck in der Pulverförderkammer frühestens gleichzeitig wie, oder vorzugsweise um eine bestimmte Verzögerungszeit später als ein Steuersignal zum Öffnen des am Pulvereinlass der Pulverförderkammer angeordneten Pulvereinlassventils angelegt wird, so dass der Aufbau des Unterdruckes in der Pulverförderkammer frühestens gleichzeitig mit dem Öffnen des Pulvereinlassventils beginnt, vorzugsweise aber um die genannte vorbestimmte Verzögerungszeit später als das Öffnen des Pulvereinlassventils. Die vorbestimmte Verzögerungszeit liegt vorzugsweise in einem Bereich zwischen 0 ms und 50 ms bei einem Förderzyklus der Förderkammer (= Pumpenzyklus der Pulverdichtstrompumpe) von ungefähr 200 ms. Dieses Beispiel schließt jedoch nicht aus, andere Verzögerungszeiten und Zykluszeiten für die Pulverdichtstrompumpe zu verwenden.

Dadurch, dass bei vorteilhaften Realisierungen der erfindungsgemäßen Lösung während der Saugphase der Pulverdichtstrompumpe in der Pulverförderkammer erst dann ein Unterdruck angelegt wird, wenn bereits das Pulvereinlassventil geöffnet ist bzw. frühestens gleichzeitig mit dem Öffnen des Pulvereinlassventils, kann erreicht werden, dass der Unterdruck in der Pulverförderkammer einer Öffnungsbewegung des Pulvereinlassventils, insbesondere wenn dieses als Quetschventil ausgeführt ist, zumindest zum Zeitpunkt des Beginns der Öffnungsbewegung des Pulvereinlassventils weniger stark entgegenwirkt als bei aus dem Stand der Technik bekannten und als Mehr-Kammer-Pulverdichtstrompumpen ausgebildeten Lösungen.

Zur Verkürzung der Reaktionszeit der erfindungsgemäßen Pulverdichtstrompumpe und somit zum Erhöhen der Förderfrequenz dieser ist zusätzlich oder alternativ zu der zuvor genannten Maßnahme vorzugsweise vorgesehen, dass das am Pulvereinlass der Pulverförderkammer vorgesehene Pulvereinlassventil sowie das am Pulverauslass der Pulverförderkammer vorgesehene Pulverauslassventil jeweils als pneumatisch ansteuerbares Quetschventil ausgebildet sind. Zur Ansteuerung dieser Quetschventile kommen entsprechende Steuerventile zum Einsatz, mit denen in koordinierter Weise Betätigungsdruckluft den Quetschventilen zugeführt wird.

Gemäß bevorzugten Ausführungsformen der erfindungsgemäßen Pulverdichtstrompumpe ist vorgesehen, dass die Länge der pneumatischen Steuerleitungen zu den Quetschventilen möglichst verkürzt ist, um zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Zu diesem Zweck ist bei bevorzugten Ausführungsformen der erfindungsgemäßen Pulverdichtstrompumpe beispielsweise ein vorzugsweise aus mehreren Modulen zusammengesetzter Materialblock vorgesehen, in welchem die mindestens eine Pulverförderkammer der Pulverdichtstrompumpe gebildet bzw. an welchem die mindestens eine Pulverförderkammer der Pulverdichtstrompumpe angeordnet ist, wobei in vorteilhafter Weise ebenfalls das Pulvereinlassventil und das Pulverauslassventil der mindestens einen Pulverförderkammer der Pulverdichtstrompumpe an diesem Materialblock angeordnet sind. Insbesondere sind dabei die entsprechenden Steuerventile, die zum pneumatischen Ansteuern des vorzugsweise jeweils als Quetschventil ausgebildeten Pulvereinlass- und Pulverauslassventils dienen, mit dem Pulvereinlassventil bzw. dem Pulverauslassventil über im Materialblock ausgebildeten Druckluft-Kanälen strömungsmäßig derart direkt verbunden, um die Zufuhr und Abfuhr von Betätigungsluft zu dem als Quetschventil ausgebildeten Pulvereinlass- bzw. Pulverauslassventil zu gewährleisten.

In diesem Zusammenhang ist es ferner von Vorteil, wenn alle Steuerventile, welche mit der mindestens einen Pulverförderkammer der erfindungsgemäßen Pulverdichtstrompumpe für die Zufuhr von Transportdruckluft (während der Abgabephase der Pulverdichtstrompumpe) und von Vakuum (während der Saugphase der Pulverdichtstrompumpe) strömungsmäßig verbunden sind, an dem Materialblock angeordnet sind und mittels Kanälen, welche in dem Materialblock gebildet sind, mit der einzigen Pulverförderkammer strömungsmäßig direkt verbunden sind.

Mit diesen Maßnahmen kann erreicht werden, dass die Länge der pneumatischen Steuerleitungen zu den Quetschventilen und die Länge der Luftleitungen zu der mindestens einen Pulverförderkammer möglichst verkürzt sind, um damit zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Wie bereits ausgeführt, kann die Reaktionszeit der erfindungsgemäßen Pulverdichtstrompumpe verkürzt und damit die Förderfrequenz erhöht werden, indem Sorge getragen wird, dass während der Saugphase der Pulverdichtstrompumpe, also dann, wenn in der Pulverförderkammer ein Unterdruck angelegt wird, dieses frühestens gleichzeitig mit dem Öffnen des am Pulvereinlass der Pulverförderkammer angeordneten Pulvereinlassventils beginnt. Alternativ oder zusätzlich hierzu kann die Pumpenfrequenz dadurch erhöht werden, indem die zur pneumatischen Betätigung des als Quetschventil ausgebildeten Pulvereinlassventils bzw. des als Quetschventil ausgebildeten Ausgangsventils vorgesehenen Kanäle zum Zuführen bzw. Abführen von Betätigungsdruckluft zu den Quetschventilen insgesamt möglichst verkürzt wird.

Zusätzlich hierzu ist es von Vorteil, wenn die Weglänge der Kanäle bzw. des Kanals zum Zuführen der Transportdruckluft zu der mindestens einen Pulverförderkammer bzw. die Weglänge der Kanäle bzw. des Kanals zum Anlegen eines Vakuums in der Pulverförderkammer verkürzt ist. Auf diese Weise können Reaktions-Verzögerungszeiten reduziert werden, wenn das Pulvereinlassventil bzw. das Pulverauslassventil angesteuert wird, und wenn in der mindestens einen Pulverförderkammer während der Saugphase ein Vakuum bzw. während der Abgabephase ein Überdruck angelegt wird.

Indem die Förderfrequenz der Pulverdichtstrompumpe entsprechend erhöht wird, ist eine hinreichende Homogenität in dem am Pulverauslass der Pulverdichtstrompumpe abgegebenen Pulverstrom gewährleistet.

Um die Homogenität des Pulverstromes am Pulverauslass der Pulverdichtstrompumpe weiter zu erhöhen, und um insbesondere das Auftreten von störenden Pulsationen im Pulverstrom stromabwärts des Pulverauslasses der Pulverdichtstrompumpe zu vermeiden, kommt gemäß bevorzugten Realisierungen der erfindungsgemäßen Lösung zusätzlich oder alternativ zu den zuvor genannten Maßnahmen eine Zusatzdruckluft-Einlassvorrichtung zum Einsatz. Diese Zusatzdruckluft-Einlassvorrichtung mündet an mindestens einer Stelle in den Pulverweg zwischen dem der mindestens einen Pulverförderkammer zugeordneten Pulverauslassventil und dem Pulverauslass der Pulverdichtstrompumpe oder vorzugsweise unmittelbar stromabwärts des Pulverauslasses der Pulverdichtstrompumpe und dient zum bedarfsweisen Zuführen von Zusatzdruckluft, die als zusätzliche Transportdruckluft dient. Mit anderen Worten, zusätzlich zu der während der Abgabephase der Pulverdichtstrompumpe in die Pulverförderkammer eingeleiteten Transportdruckluft wird mit Hilfe der Zusatzdruckluft-Einlassvorrichtung unmittelbar vor oder nach dem Pulverauslass der Pulverdichtstrompumpe zu geeigneten Zeiten bzw. Ereignissen zusätzlich Transportdruckluft eingespeist.

Zur Realisierung der mindestens einen Zusatzdruckluft-Einlassvorrichtung ist in bevorzugter Weise ein Filterrohr vorgesehen, durch welches der Pulverweg zwischen dem Pulverauslassventil und dem Pulverauslass der Pulverdichtstrompumpe zumindest bereichsweise verläuft. Vorzugsweise wird der Pulverweg stromabwärts des Pulverauslassventils der Pulverdichtstrompumpe auf einem Teil seiner Länge durch das Filterrohr hindurch geleitet. Das Filterrohr ist für Druckluft, jedoch nicht für die Partikel des Beschichtungspulvers durchlässig. Hierbei bietet es sich an, dass Filterrohr aus mikroporösem Material zu bilden, wie beispielsweise Sintermaterial. Das Filterrohr bildet eine Umfangswand um den Pulverweg und damit eine relativ große Fläche, durch welche bereits kleine Mengen Zusatzdruckluft durch das Filterrohr hindurch homogen in den Pulverweg strömen und Pulverpartikel im Sinne einer Vergleichmäßigung der Pulverkonzentration beeinflussen können.

Selbstverständlich ist es aber auch möglich, die Zusatzdruckluft-Einlassvorrichtung ohne Filterelement, insbesondere Filterrohr auszubilden. Das Filterelement bzw. Filterrohr dient lediglich dazu, zu verhindern, dass Pulverpartikel in eine mit dem Zusatzdruckluft-Einlassvorrichtung verbundene Zusatzdruckluftleitung eindringen können.

Um besonders wirkungsvoll Strömungspulsationen im Pulverweg stromabwärts des Pulverauslasses der Pulverdichtstrompumpe reduzieren oder vermeiden zu können, ist es von Vorteil, wenn über die Zusatzdruckluft-Einlassvorrichtung Zusatzdruckluft pulsierend in den Pulverweg nach dem Pulverauslassventil der Pulverdichtstrompumpe eingeleitet wird. Die Pulsfrequenz der Zusatzdruckluft sollte hierbei mindestens gleich groß wie die Frequenz der Pulverförderkammer sein, mit welcher Pulverportionen von der Pulverförderkammer abgegeben werden.

Gemäß bevorzugten Realisierungen der erfindungsgemäßen Pulverdichtstrompumpe ist vorgesehen, dass die Pulsfrequenz der Zusatzdruckluft gleich groß ist wie die Frequenz der Pulverförderkammer, d. h. die Frequenz, mit welcher Pulverportionen von der Pulverförderkammer abgegeben werden. In diesem Zusammenhang bietet es sich an, eine Vorrichtung zum Zuführen von pulsierender Zusatzdruckluft zu der mindestens einen Zusatzdruckluft-Einlassvorrichtung vorzusehen, wobei dieser Vorrichtung zum Zuführen von pulsierender Zusatzdruckluft in vorteilhafter Weise derart ausgebildet ist, dass die Zusatzdruckluft der mindestens einen Zusatzdruckluft-Einlassvorrichtung mit Bezug auf den Pulverabgabezyklus der Pulverförderkammer gegenphasig zuzuführen. Auf diese Weise kann erreicht werden, dass die Zusatzdruckluft immer dann in den Pulverweg nach dem Pulverauslassventil eingespeist wird, wenn das Pulverauslassventil geschlossen ist. Mit dieser Maßnahme kann insbesondere die Strömungsgeschwindigkeit in der Pulverleitung stromabwärts des Pulverauslasses der Pulverdichtstrompumpe einen konstanten Wert annehmen, ohne dass Fluktuationen auftreten.

Der vorliegenden Erfindung liegt insbesondere auch die Erkenntnis zugrunde, dass insbesondere auch bei einer als Ein-Kammer-Pulverdichtstrompumpe ausgebildeten Pulverdichtstrompumpe es von Vorteil ist, am Pulverauslass der Pulverdichtstrompumpe Zusatzdruckluft als zusätzliche Transportdruckluft einzuspeisen, wobei stromabwärts des Pulverauslasses der Pulverdichtstrompumpe das Pulver-Luft-Gemisch umso homogener durch die Pulverleitung strömt, wenn die während der Ansaugphase der Pulverförderkammer in den Pulverweg stromabwärts des Pulverauslassventils eingespeiste Menge an Zusatzdruckluft im Wesentlichen gleich groß ist wie die während der Pulverabgabephase in die Pulverförderkammer eingespeiste Menge an Transportdruckluft ist, welche zum pneumatischen Ausstoßen der in der Pulverförderkammer zuvor eingesaugten Pulverportion dient.

Um diese Erkenntnis bei der erfindungsgemäßen Pulverdichtstrompumpe zu realisieren, ist es einerseits denkbar eine Vorrichtung zum Zuführen von pulsierender Zusatzdruckluft zu der mindestens einen Zusatzdruck-Einlassvorrichtung vorzusehen, wobei diese Vorrichtung die Menge der in den Pulverweg eingespeisten Zusatzdruckluft an die Menge der in die Pulverförderkammer eingespeisten Transportdruckluft anpasst.

Auf eine aufwendige Druckluftmengen-Steuerung kann insbesondere verzichtet werden, wenn erreicht wird, dass die beim Einspeisen der Transportdruckluft in die Pulverförderkammer und beim Einspeisen der Zusatzdruckluft in den Pulverweg auftretenden pneumatischen Widerstände einen im Wesentlichen gleichen Wert annehmen. Um dies zu erreichen, ist es von Vorteil, wenn zumindest die wesentlichen Bauteile der Zusatzdruckluft-Einlassvorrichtung, d. h. die Bauteile, die zum Einspeisen der Zusatzdruckluft in den Pulverweg benötigt werden, den gleichen Aufbau aufweisen, wie die wesentlichen Bauteile der Pulverförderkammer, d. h. die Bauteile der Pulverförderkammer, die zum Einspeisen der Transportdruckluft während der Abgabephase der Pulverförderkammer benötigt werden. Beispielsweise ist es in diesem Zusammenhang denkbar, dass die Zusatzdruckluft-Einlassvorrichtung eine Kammerwand aufweist, welche mindestens auf einem Teil ihrer Länge durch einen Filter gebildet ist, welcher den Pulverweg umgibt und von einer Zwischenkammer trennt, die den Filter umgibt und zwischen dem Filter und einem Gehäuse der Zusatzdruckluft-Einlassvorrichtung gebildet ist. Dabei sollte zumindest der Filter der Zusatzdruckluft-Einlassvorrichtung baugleich mit dem Filter der Pulverförderkammer sein.

Andererseits ist es ferner denkbar, wenn eine Steuereinrichtung vorgesehen ist, durch welche die Zusatzdruckluft-Frequenz vorzugsweise automatisch in Abhängigkeit von der Pulverabgabefrequenz der Pulverförderkammer einstellbar vorzugsweise automatisch steuerbar oder regelbar ist. Indem insbesondere die Pulsfrequenz der Zusatzdruckluft angepasst wird an die Frequenz der Pulverförderkammer, wobei in vorteilhafter Weise die Zusatzdruckluft immer dann in den Pulverweg nach dem Pulverauslassventil der Pulverdichtstrompumpe eingespeist wird, wenn sich die Pulverdichtstrompumpe in ihrer Saugphase befindet, in welcher das Pulvereinlassventil geöffnet und das Pulverauslassventil geschlossen ist, ist sichergestellt, dass immer eine ausreichende Menge an Transportdruckluft verwendet wird, die für den Transport des Beschichtungspulvers notwendig ist.

Selbstverständlich ist es aber auch denkbar, dass zusätzlich während der Abgabephase der Pulverdichtstrompumpe Zusatzdruckluft über die Zusatzdruckluft-Einlassvorrichtung in den Pulverweg nach dem Pulverauslassventil der Pulverdichtstrompumpe eingeleitet wird.

Indem jedoch nur dann mit Hilfe der Zusatzdruckluft-Einlassvorrichtung Zusatzdruckluft in den Pulverweg eingespeist wird, wenn sich die Pulverdichtstrompumpe in ihrer Saugphase befindet, können Ressourcen (Druckluft und somit Energie) für den Betrieb der Pulverdichtstrompumpe reduziert werden. Insbesondere wird dadurch auch verhindert, dass zu viel Transportdruckluft in dem Pulverweg stromabwärts des Pulverauslasses der Pulverdichtstrompumpe vorhanden ist, so dass vermieden wird, dass beim stromabwärts der Pulverdichtstrompumpe angeordneten Verbraucher (Pulversprühbeschichtungspistole oder dergleichen Einrichtung zum Versprühen von Beschichtungspulver) Pulverpartikel aus dem Sprühstrahl herausgetrieben werden.

In diesem Zusammenhang ist es insbesondere von Vorteil, wenn mit Hilfe einer Steuereinrichtung die pro Zeiteinheit durch die Zusatzdruckluft-Einlassvorrichtung hindurchströmende Zusatzdruckluftmenge, welche in den Pulverweg nach dem Pulverauslassventil der Pulverdichtstrompumpe eingeleitet wird, in Abhängigkeit von der insgesamt pro Zeiteinheit geförderten Pulvermenge einstellbar, vorzugsweise automatisch steuerbar oder regelbar ist.

Im Hinblick auf ein Verfahren zum Fördern von Beschichtungspulver von einem ersten Pulverreservoir zu einem stromabwärts des ersten Pulverreservoirs angeordneten zweiten Pulverreservoir oder zu einer stromabwärts des ersten Pulverreservoirs angeordneten Pulversprühbeschichtungspistole oder dergleichen Einrichtung zum Versprühen von Beschichtungspulver ist erfindungsgemäß vorgesehen, dass das Verfahren den Verfahrensschritt des Bereitstellens einer Pulversprühbeschichtungsvorrichtung, welche die erfindungsgemäße Pulverdichtstrompumpe sowie mindestens eine Sprühbeschichtungspistole aufweist, und den Verfahrensschritt des Durchführens eines bestimmten Betriebszyklus aufweist, wobei dieser bestimmte Betriebszyklus folgende Zyklusschritte umfasst:
- a): Erzeugen eines Unterdruckes in der mindestens einen Pulverförderkammer der Pulverdichtstrompumpe zum Einsaugen von Beschichtungspulver in die Pulverförderkammer durch ein geöffnetes Pulvereinlassventil der Pulverdichtstrompumpe, während das Pulverauslassventil der Pulverdichtstrompumpe geschlossen ist;
- b): Verschließen des Pulvereinlassventils und Öffnen des Pulverauslassventils;
- c): Einleiten von Druckgas in die Pulverförderkammer zum Abgeben des Beschichtungspulvers aus der Pulverförderkammer durch das offene Pulverauslassventil, während das Pulvereinlassventil geschlossen ist; und
- d): Verschließen des Pulverauslassventils und Öffnen des Pulvereinlassventils.

Gemäß einem Aspekt des erfindungsgemäßen Verfahrens ist vorgesehen, dass beim Zyklusschritt c) an mindestens einer Stelle in den Pulverweg am Pulverauslassbereich der Pulverförderkammer Spülluft eingespeist wird. Alternativ oder zusätzlich ist vorgesehen, dass beim Zyklusschritt d) an mindestens einer Stelle in den Pulverweg am Pulvereinlassbereich der Pulverdichtstrompumpe Spülluft eingespeist wird.

Nachfolgend wird unter Bezugnahme auf die beiliegenden Zeichnungen eine exemplarische Ausführungsform der Erfindung näher beschrieben.

Es zeigen:
- FIG. 1: schematisch und in einer isometrischen Ansicht eine exemplarische Ausführungsform der erfindungsgemäßen Pulverdichtstrompumpe mit zwei parallel zueinander angeordneten Pulverförderkammern;
- FIG. 2: schematisch und in einer Explosionsansicht die in FIG. 1 gezeigte exemplarische Ausführungsform der erfindungsgemäßen Pulverdichtstrompumpe;
- FIG. 3: schematisch eine Prinzipdarstellung der Funktionsweise der exemplarischen Ausführungsform der erfindungsgemäßen Pulverdichtstrompumpe gemäß FIG. 1; und
- FIG. 4: schematisch ein Pneumatikdiagramm für die exemplarische Ausführungsform der erfindungsgemäßen Pulverdichtstrompumpe gemäß FIG. 1.

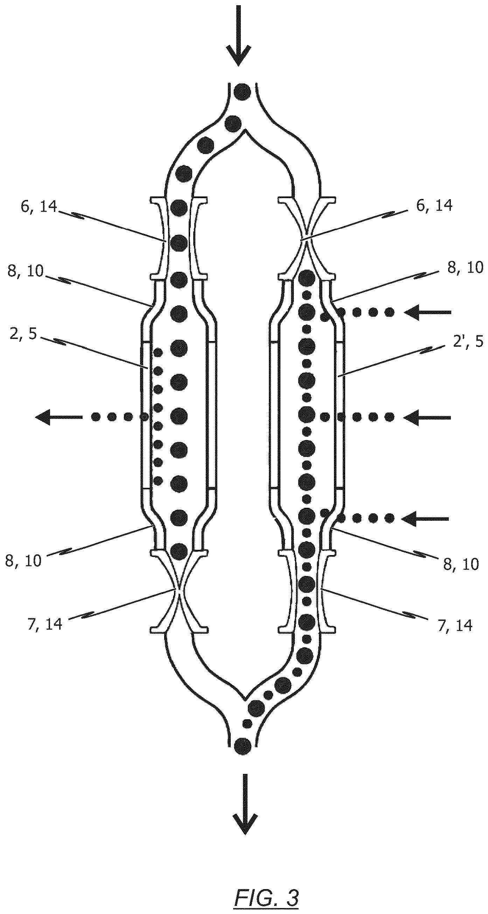

Nachfolgend wird zunächst unter Bezugnahme auf die Darstellung in FIG. 3 die Funktionsweise einer Pulverdichtstrompumpe 1 gemäß einer exemplarischen Ausführungsform der vorliegenden Erfindung beschrieben, bei welcher zwei parallel zueinander angeordnete Pulverförderkammern 2, 2' zum Einsatz kommen.

Wie schematisch in FIG. 3 gezeigt, weist jede der beiden parallel zueinander angeordneten Pulverförderkammern 2, 2' einen insbesondere zylinderförmigen Hauptkörperbereich 3 mit einem zumindest im Wesentlichen einheitlichen effektiven Strömungsquerschnitt auf. Jeder insbesondere zylinderförmige Hauptkörperbereich 3 der beiden Pulverförderkammern 2, 2' weist ein zylinderförmiges, insbesondere kreiszylinderförmiges Mantelrohr 4 und ein im Inneren des Mantelrohrs 4 aufgenommenes Filterelement 5 auf. Bei dem Filterelement 5 des Hauptkörperbereichs 3 der Pulverförderkammer 2, 2' handelt es sich insbesondere um ein zylinderförmiges Filterelement 5.

Jede Pulverförderkammer 2, 2' weist einen Pulvereinlass mit einem Pulvereinlassventil 6 und einen Pulverauslass mit einem Pulverauslassventil 7 auf. Die jeweiligen Pulvereinlassventile 6 werden im Folgenden auch als "erste Ventile" bzw. "ansaugseitige Ventile" bezeichnet. Die Pulverauslassventile 7 werden auch als "zweite Ventile" bzw. "förderseitige Ventile" bezeichnet.

An den jeweiligen ansaugseitigen und förderseitigen Endbereichen der Hauptkörperbereiche der Pulverförderkammern 2, 2' weisen diese einen Übergangsbereich 8 auf, der ausgebildet ist, einen effektiven Strömungsquerschnitt der Pulverförderkammer 2, 2' auf einen effektiven Strömungsquerschnitt der entsprechend angeschlossenen Pulverleitung 9 bzw. auf den effektiven Strömungsquerschnitt des zwischen der Pulverförderkammer 2, 2' und der Pulverleitung 9 angeordneten Ventils 6, 7 zu reduzieren. Der Übergangsbereich 8 ist dabei insbesondere zumindest bereichsweise als konusförmiger Bereich ausgeführt.

Die jeweiligen am ansaugseitigen Endbereich des Hauptkörperbereichs 3 der Pulverförderkammer 2, 2' und am förderseitigen Endbereich des Hauptkörperbereichs 3 der Pulverförderkammer 2, 2' angeordneten Übergangsbereiche 8 sind als von dem Hauptkörperbereich 3 separate Komponenten ausgebildet, die lösbar mit dem Hauptkörperbereich 3 der Pulverförderkammer 2, 2' verbunden bzw. verbindbar sind.

Die Übergangsbereiche 8 dienen dazu, die Nennweite des Hauptkörperbereichs 3 der Pulverförderkammer 2, 2', d.h. den inneren Durchmesser des Hauptkörperbereichs 3 der Pulverförderkammer 2, 2', auf die Nennweite der entsprechend angeschlossenen Pulverleitung 9 bzw. auf die Nennweite des zwischengeschalteten Ventils 6, 7 anzupassen/zu reduzieren.

Die Übergangsbereiche 8 weisen ein insbesondere konusförmiges Filterelement 10 auf, welches in einem Filtergehäuse 11 aufgenommen ist.

Während eines Ansaugprozesses wird in einer der Pulverförderkammern 2, 2' der Pulverdichtstrompumpe 1 ein Vakuum (Unterdruck) erzeugt. Der Unterdruck saugt das zu fördernde Pulver, insbesondere Beschichtungspulver, über den entsprechenden Pulvereinlass in die Pulverförderkammer 2, 2' ein. Das feinporöse Filterelement 5 in dem Hauptkörperbereich 3 der Pulverförderkammer 2, 2' scheidet das Pulver ab. Die Pulverförderkammer 2, 2' ist während des Ansaugprozesses an der Ansaugseite bzw. Förderseite durch das entsprechende förderseitige Ventil geschlossen.

Während des Förderprozesses hingegen wird das ansaugseitige Ventil 6 an der Pulvereinlassseite der Pulverförderkammer 2, 2' geschlossen, während das förderseitige Ventil 7 geöffnet wird. Das zuvor während des Ansaugprozesses in die Pulverförderkammer 2, 2' eingesaugte Beschichtungspulver wird dann mittels Überdruck, das mit Druckluft durch das feinporöse Filterelement 5 des Hauptkörperbereichs 3 der Pulverförderkammer 2, 2' aufgebaut wird, aus der Pulverförderkammer 2, 2' gepresst und weiterbefördert.

Wie es der Darstellung in FIG. 3 entnommen werden kann, alterniert der Ansaug- und Förderprozess zwischen den beiden parallel zueinander angeordneten Pulverförderkammern 2, 2'. Mit anderen Worten, die beiden parallel zueinander angeordneten Pulverförderkammern 2, 2' werden gegenphasig betrieben.

Der schematischen Darstellung in FIG. 3 ist ferner die Funktionsweise der konusförmigen Filterelemente 10 im Übergangsbereich 8 am pulverauslassseitigen Endbereich und am pulvereinlassseitigen bzw. förderseitigen Endbereich des Hauptkörperbereichs 3 der Pulverförderkammer 2, 2' angedeutet.

Im Einzelnen wird gemäß Realisierungen der vorliegenden Erfindung während des Förderprozesses, also dann, wenn das ansaugseitige Ventil 6 an der Pulvereinlassseite der Pulverförderkammer 2, 2' geschlossen und das förderseitige Ventil 7 geöffnet ist, nicht nur in einem Ringraum zwischen dem zylinderförmigen Filterelement 5 des Hauptkörperbereichs 3 und dem zylinderförmigen Mantelbereich 4 des Hauptkörperbereichs 3 ein Überdruck angelegt, sondern auch an dem jeweiligen konusförmigen Filterelement 10 der Übergangsbereiche 8. Auf diese Weise wird während des Förderprozesses Spülluft in Gestalt von Druckluft über die konusförmigen Filterelemente 10 den beiden Endbereichen der Pulverförderkammer 2, 2' zugeführt, um die Endbereiche von Pulverablagerungen freizuhalten, oder um Pulverablagerungen an den Endbereichen zu entfernen.

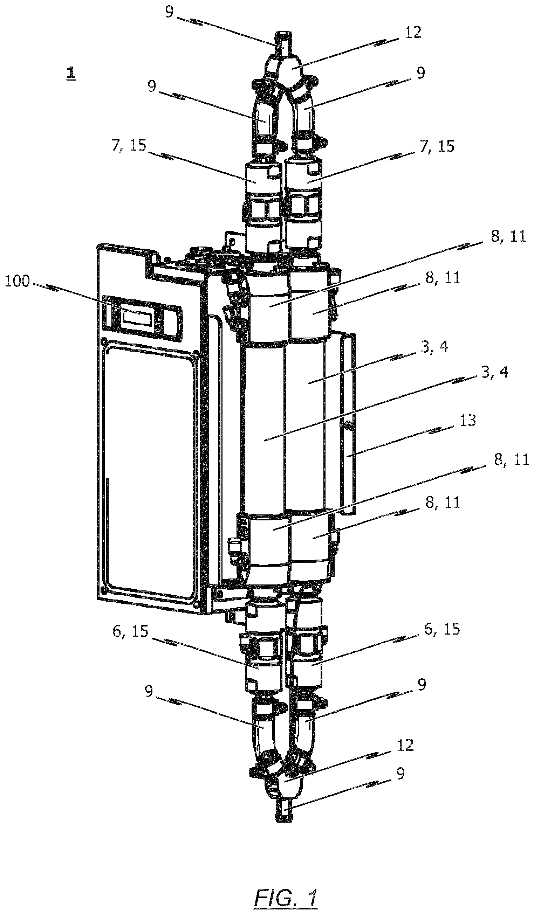

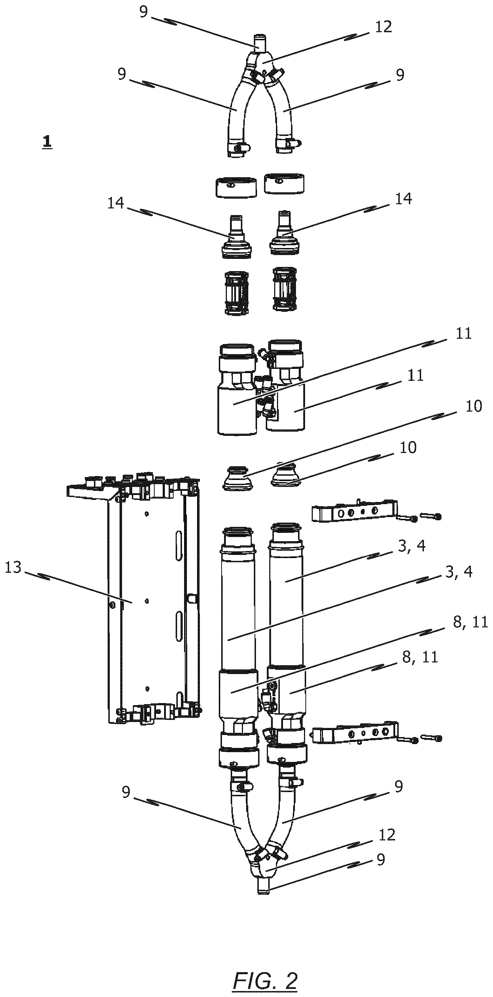

Nachfolgend wird unter Bezugnahme auf die Darstellungen in FIG. 1 und FIG. 2 eine exemplarische Ausführungsform einer Pulverdichtstrompumpe 1 beschrieben, bei welcher zwei parallel zueinander angeordnete Pulverförderkammern 2, 2' gemäß einer Ausführungsform der vorliegenden Erfindung zum Einsatz kommen.

Im Einzelnen zeigt FIG. 1 in einer isometrischen Ansicht den Aufbau einer Pulverdichtstrompumpe 1 mit zwei parallel zueinander angeordneten Pulverförderkammern 2, 2' gemäß einer exemplarischen Ausführungsform der vorliegenden Erfindung. Die Pulverdichtstrompumpe 1 weist zwei Pulverförderkammern 2, 2' auf, wobei jede der beiden Pulverförderkammern 2, 2' einen zylinderförmigen Hauptkörperbereich 3 mit einem zylinderförmigen und insbesondere kreiszylinderförmigen Mantelrohr 4 und einem im Inneren des Mantelrohrs 4 angeordneten gasdurchlässigen Filterelement 5 aufweist. Das Filterelement 5 ist vorzugsweise ein steifer Körper aus Sintermaterial, vorzugsweise aus gesintertem Metall, zum Beispiel Bronze oder Aluminium, oder aus gesintertem Kunststoff oder einer gesinterten Materialmischung.

Wie es insbesondere der in FIG. 2 gezeigten Explosionsdarstellung entnommen werden kann, weist der Hauptkörperbereich 3 einer jeden Pulverförderkammer 2, 2' ansaugseitig und förderseitig einen mit dem Hauptkörperbereich 3 lösbar verbundenen oder verbindbaren Übergangsbereich 8 auf, der Teil der Pulverförderkammer 2, 2' ist. Der Übergangsbereich 8 dient dazu, die Nennweite des Hauptkörperbereichs 3 der Pulverförderkammer 2, 2' auf die Nennweite eines ansaugseitigen bzw. förderseitigen Ventils 6, 7 anzupassen/zu reduzieren.

Um hierzu die Nennweite, d.h. den inneren Durchmesser des zylinderförmigen Hauptkörperbereichs 3 der Pulverförderkammer 2, 2', entsprechend auf die (reduzierte) Nennweite des entsprechenden Ventils 6, 7 bzw. der entsprechenden Pulverleitung 9 zu reduzieren, weist jeder Übergangsbereich 8 ein sich insbesondere konisch in Richtung des Ventils 6, 7 bzw. in Richtung der Förderleitung verjüngendes Filterelement 10 auf.

Das Filterelement 10 ist - wie auch das Filterelement 5 des Hauptkörperbereichs 3 - vorzugsweise ein steifer Körper insbesondere aus Sintermaterial, vorzugsweise aus gesintertem Metall, zum Beispiel Bronze oder Aluminium, oder aus gesintertem Kunststoff oder einer gesinterten Materialmischung. Selbstverständlich kommen aber auch andere Ausführungsformen für das sich konisch in Richtung des jeweiligen Ventils 6, 7 verjüngenden Filterelements 10 des Übergangsbereichs 8 in Frage.

Das sich konisch in Richtung des entsprechenden Ventils 6, 7 verjüngende Filterelement 10 definiert den effektiven Strömungsquerschnitt des Übergangsbereichs 8, um die Nennweite des Hauptkörperbereichs 3 der Pulverförderkammer 2, 2' entsprechend an die Nennweite des an dem jeweiligen Endbereich der Pulverförderkammer 2, 2' angeschlossenen Ventils 6, 7 anzupassen.

Wie es der Explosionsdarstellung in FIG. 2 entnommen werden kann, ist das jeweilige sich konisch verjüngende Filterelement 10 des Übergangsbereichs 8 lösbar mit dem entsprechenden Endbereich des Hauptkörperbereichs 3 der Pulverförderkammer 2, 2' verbunden, insbesondere über eine mit Hilfe einer Schraubverbindung oder mit Hilfe einer anderen lösbaren Verbindung, beispielsweise mit Hilfe eines Bajonettverschlusses, fixierbare Steckverbindung verbindbar.

Jeder Übergangsbereich 8 weist ferner ein entsprechendes Filtergehäuse 11 auf, in welchem das sich konisch verjüngende Filterelement 10 aufnehmbar ist. Zwischen dem Innenbereich des Filtergehäuses 11 und dem Außenbereich des sich konisch verjüngenden Filterelements 10 ist ein Luftraum gebildet, der über eine entsprechende Luftleitung bedarfsweise mit Überdruck beaufschlagbar ist.

An dem Pulvereinlass einer jeden Pulverförderkammer 2, 2' der in FIG. 1 und FIG. 2 schematisch gezeigten Pulverdichtstrompumpe 1 ist jeweils ein erstes an dem ansaugseitigen Endbereich der Pulverförderkammer 2, 2' angeschlossenes Quetschventil 6 vorgesehen. Ein zweites Quetschventil 7 ist an dem jeweiligen förderseitigen Endbereich der Pulverförderkammer 2, 2', d.h. an dem förderseitigen Endbereich des Übergangsbereichs 8 der Pulverförderkammer 2, 2' angeschlossen.

Obwohl bei der exemplarischen Ausführungsform als Pulvereinlass- und Pulverauslassventile 6, 7 jeweils Quetschventile (Englisch: *pinch valves)* zum Einsatz kommen, können diese selbstverständlich von beliebiger Art sein.

Die Pulvereinlassseite der beiden ersten (ansaugseitigen) Ventile 6 sind bei der dargestellten Ausführungsform über Zufuhrleitungszweige eines Y-Verbindungsstücks 12 mit einer Pulverzuleitung 9 verbunden, welche beispielsweise zu einem Pulverbehälter (in den Zeichnungen nicht dargestellt) führt. Hierzu werden Schlauchverbinder verwendet, um die Pulvereinlassseite der beiden ersten Ventile 6 (Quetschventile) mit den Zufuhrleitungszweigen des Y-Verbindungsstücks 12 zu verbinden.

Denkbar ist es allerdings auch, dass an Stelle eines Y-Verbindungsstücks 12 die jeweiligen Pulvereinlassseiten der ersten (ansaugseitigen) Ventile/Quetschventile 6 über getrennte Pulverzufuhrleitungen mit einem oder mit zwei verschiedenen Pulverbehältern strömungsmäßig verbunden sind.

Die Pulverauslässe der beiden zweiten (förderseitigen) Ventil/Quetschventile 7 sind bei der dargestellten Ausführungsform durch Abgabeleitungszweige, beispielsweise ebenfalls eines Y-förmigen Leitungsverbindungsstücks 12, mit einem Ende eines Pulverabgabeschlauchs 9 verbunden, dessen anderes Ende in einen weiteren (nicht dargestellten) Pulverbehälter mündet. Die Pulverabgabeleitung kann eine steife Rohrleitung sein, ist jedoch vorzugsweise ein flexibler Schlauch.

Bei der in FIG. 1 und FIG. 2 dargestellten Ausführungsform sind die Pulverförderkammern 2, 2' jeweils in einer Halterung 13 aufgenommen und dort arretiert. Die Pulverförderkammern 2, 2' sind insbesondere mit Hilfe einer lösbaren Schraub- oder Bajonettverbindung mit der Halterung 13 verbunden.

Nachfolgend wird unter Bezugnahme auf die Explosionsdarstellung gemäß FIG. 2 der Aufbau einer jeden bei der Pulverdichtstrompumpe 1 zum Einsatz kommenden Pulverförderkammer 2, 2' näher beschrieben.

Demgemäß ist jede Pulverförderkammer 2, 2' eingeteilt in einen Hauptkörperbereich 3 mit einem zumindest im Wesentlichen einheitlichen effektiven Strömungsquerschnitt und zwei an den jeweiligen Endbereichen des Hauptkörperbereichs 3 angeordneten Übergangsbereichen 8 mit konusförmig verlaufendem Strömungsquerschnitt.

Dem insbesondere zylinderförmigen Hauptkörperbereich 3 einer jeden Pulverförderkammer 2, 2' ist jeweils ein Mantelrohr 4 zugeordnet, in dessen Inneren ein gasdurchlässiges und zumindest im Wesentlichen zylinderförmiges Filterelement 5 zugeordnet. Das Mantelrohr 4 mit dem im Inneren aufgenommenen Filterelement 5 bildet den Hauptkörperbereich 3 einer jeden Pulverförderkammer 2, 2'.

An dem ansaugseitigen Endbereich des Hauptkörperbereichs 3 der Pulverförderkammer 2, 2' ist ein ansaugseitiger Übergangsbereich 8 der zuvor genannten Art vorgesehen. Mit anderen Worten, an dem ansaugseitigen Endbereich des Hauptkörperbereichs 3 ist ein sich konisch verjüngendes Filterelement 10 mit einem entsprechenden, dem konisch verjüngenden Filterelement 10 zugeordneten Mantelbereich 11 zugeordnet. Gleiches gilt im übertragenen Sinne auch für den am förderseitigen Endbereich des Hauptkörperbereichs 3 der Pulverförderkammer 2, 2' entsprechend angeordneten Übergangsbereich 8.

Bei der in den Zeichnungen gezeigten exemplarischen Ausführungsform der erfindungsgemäßen Pulverdichtstrompumpe 1 sind die ersten (ansaugseitigen) Ventile 6 und die zweiten (förderseitigen) Ventile 7 vorzugsweise jeweils als Quetschventile ausgeführt.

Jedes Quetschventil 6, 7 weist ein Quetschventilgehäuse 15 mit einem einlassseitigen Flansch und einem auslassseitigen Flansch auf. In dem Quetschventilgehäuse 15 ist ein elastisch verformbares Ventilelement 14 aufgenommen. Das elastisch verformbare Ventilelement 14 ist insbesondere ein elastisch deformierbarer Schlauchabschnitt. Jeder Flansch weist einen Pulverleitungsanschluss (Schlauchanschluss) auf, an welchem eine Pulverleitung 9 (Pulverschlauch) anschließbar ist.

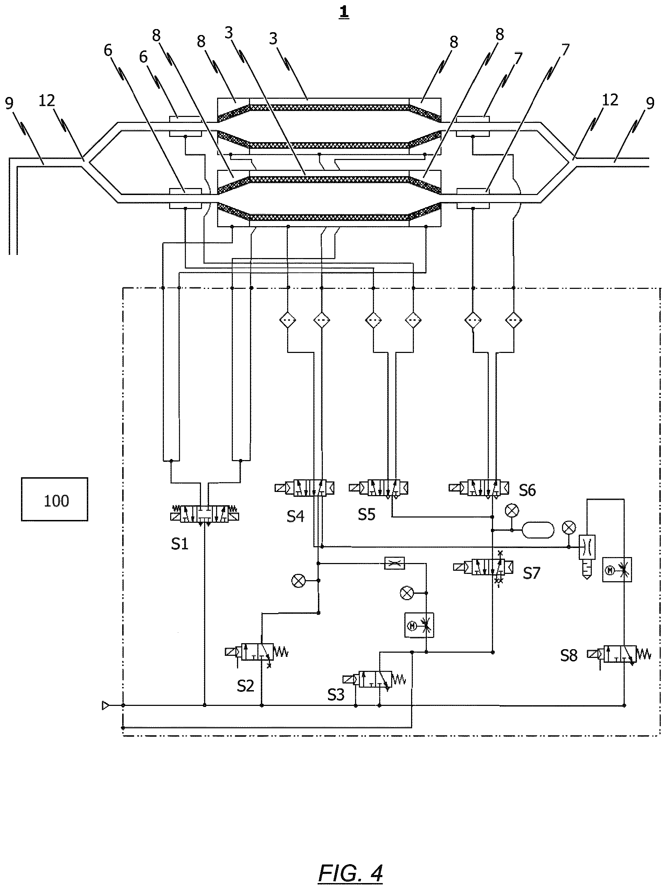

Wie es beispielsweise dem Pneumatikdiagramm gemäß FIG. 4 entnommen werden kann, ist bei jedem Übergangsbereich 8 das sich konisch verjüngende Filterelement 10 im Inneren eines entsprechenden Filtergehäuses 11 derart angeordnet, dass ein Einlass des konisch sich verjüngenden Filterelements 10 mit dem Auslass des Hauptkörperbereichs 3 der Pulverförderkammer 2, 2' in Fluidverbindung bringbar ist.

Das Filtergehäuse 11 des Übergangsbereichs 8 weist einen Anschluss 16 auf, um bedarfsweise Druckluft in den zwischen der Innenwand des Filtergehäuses 11 und dem im Inneren des Filtergehäuses 11 angeordneten sich konisch verjüngenden Filterelement 10 gebildeten Raum zuzuführen. Bei der Zufuhr von Druckluft wird der durch den Übergangsbereich 8 gebildete Bereich der Förderkammer 2, 2' entsprechend gespült und es werden dort Pulverablagerungen entfernt bzw. es wird dort verhindert, dass sich Pulverablagerungen festsetzen können.

Bei der in den Zeichnungen gezeigten exemplarischen Ausführungsform der erfindungsgemäßen Pulverdichtstrompumpe 1 ist jedes erste und zweite Ventil 6, 7 insbesondere als Quetschventil ausgeführt, wobei jedem Quetschventil 6, 7 ein elastisch verformbares Ventilelement 14 zugeordnet ist, das im Inneren eines entsprechenden Quetschventilgehäuses 15 derart angeordnet ist, dass der Einlass des Quetschventils 6, 7 mit dem Auslass des Quetschventils 6, 7 über das als elastisch verformbares Ventilelement 14 gebildete Ventilelement in Fluidverbindung bringbar ist.

Das Quetschventilgehäuse 15 weist einen Anschluss 17 auf, um bedarfsweise Druckluft in den zwischen der Innenwand des Quetschventilgehäuses 15 und den im Inneren des Quetschventilgehäuses 15 angeordneten Ventilelement 14 gebildeten Raums zuzuführen. Bei Zufuhr von Druckluft wird das Ventilelement 14 elastisch verformt, so dass die Fluidverbindung zwischen dem Einlass und dem Auslass des Quetschventils 6, 7 unterbrochen ist. Liegt hingegen keine Druckluft in dem Zwischenraum zwischen der Innenwand des Quetschventilgehäuses 15 und dem im Inneren des Quetschventilgehäuses 15 angeordneten Ventilelements 14 vor, geht das zuvor elastisch verformte Ventilelement 14 wieder in seinen Ausgangszustand über, in welchem eine Fluidverbindung zwischen dem Einlass und dem Auslass des Quetschventilgehäuses 15 vorliegt.

Über den mindestens einen Anschluss des Quetschventils 6, 7 kann auch ein Vakuumanschluss angeschlossen werden, um zum raschen Öffnen des Quetschventils die in dem Zwischenraum zuvor eingebrachte Druckluft zu evakuieren.

Das sich konisch verjüngende Filterelement 10 des Übergangsbereichs 8 ist vorzugsweise über einen Umfang von mindestens 180° und vorzugsweise über einen Umfang von 360° als gasdurchlässiges Filterelement 10 ausgeführt. Das Filterelement 10 besteht vorzugsweise aus mikroporösem Material derart, dass es für Luft, jedoch nicht für Beschichtungspulver durchlässig ist. Das Filterelement 10 kann beispielsweise aus einem Sinterkörper bestehen, beispielsweise aus Metall oder Kunststoff, oder aus einer Metall oder Kunststoff enthaltenen Materialmischung. Ferner kann es aus einem anderen Material bestehen und/oder durch eine Filtermembran gebildet sein.

Die Filterporen des Filterelements 10 sind vorzugsweise derart ausgebildet, dass Druckluft über einen sowohl in Umfangsrichtung als auch in Längsrichtung des Filterelements 10 relativ großen Pulverwegbereich in den Pulverweg, der durch den Übergangsbereich 8 gebildet/definiert wird, geleitet wird. Die Mikroporen des Filterelements 10 können radial oder in axialer Richtung zum Pulverweg geneigt sein.

In FIG. 4 ist eine exemplarische Ausführungsform eines Pneumatikschemas für die in FIG. 1 bzw. FIG. 2 schematisch gezeigte Pulverdichtstrompumpe 1 gezeigt.

Wie in FIG. 4 schematisch dargestellt, kommt zum Betrieb der Pulverdichtstrompumpe 1 eine Steuereinrichtung 100 zum Einsatz, welche in FIG. 4 schematisch angedeutet ist. Die Steuereinrichtung 100 ist ausgebildet, die einzelnen ansteuerbaren Komponenten der Pulverdichtstrompumpe 1, insbesondere die Steuerventile S1 bis S8 geeignet anzusteuern und deren Betätigung zu koordinieren.

Hierbei geht es zum einen um die koordinierte Ansteuerung der Quetschventile 6, 7 über die Steuerventile S5, S6 und S7. Zum anderen geht es um die geeignete Ansteuerung der Steuerventile S1, S2 und S4, um dem jeweiligen Hauptkörperbereich 3 der beiden Pulverförderkammern 2, 2' koordiniert Druckluft zuzuführen bzw. ein entsprechendes Vakuum anzulegen. Ferner geht es um die koordinierte Ansteuerung des Steuerventil S1, um den jeweiligen Übergangsbereichen 8 der Hauptkörperbereiche der beiden Pulverförderkammern 2, 2' koordiniert Druckluft als Spülluft zuzuführen.

Das Pneumatikdiagramm gemäß FIG. 4 zeichnet sich insbesondere dadurch aus, dass den jeweiligen Übergangsbereichen 8 am ansaugseitigen und förderseitigen Endbereich der Pulverförderkammer 2, 2' dediziert Druckluft zugeführt wird. Im Einzelnen erfolgt dies vorzugsweise gleichzeitig mit der Druckluftzufuhr zu dem Hauptkörperbereich 3 der entsprechenden Pulverförderkammer 2, 2'.

Demgemäß wird die so genannte Konusspülung, d.h. die Spülung in den jeweiligen Übergangsbereichen der Pulverförderkammer 2, 2', nur während eines Reinigungszyklus aktiviert.

Alternativ oder zusätzlich hierzu ist es aber auch denkbar, dass diese Konusreinigung aktiviert wird, und zwar während eines Pulvertransportbetriebs. Insbesondere ist es in diesem Zusammenhang denkbar, dass die Konusreinigung während des Pulvertransportbetriebs mit einer ersten Intensität und beim Reinigungsbetrieb mit einer zweiten, höheren Intensität betrieben wird. Die zusätzlich eingebrachte Luftmenge während der Reinigung äußert sich auch in einer erhöhten Reinigungseffizienz.

Die Erfindung ist nicht auf die in den Zeichnungen gezeigten Ausführungsformen beschränkt, sondern wird durch den jeweiligen Gegenstand der nachfolgenden Ansprüche definiert.

### Bezugszeichenliste

- 1: Pulverdichtstrompumpe
- 2, 2': Pulverförderkammer
- 3: Hauptkörperbereich
- 4: Mantelrohr
- 5: Filterelement
- 6: Pulvereinlassventil
- 7: Pulverauslassventil
- 8: Übergangsbereich
- 9: Pulverleitung
- 10: konusförmiges Filterelement
- 11: Filtergehäuse
- 12: Y-Verbindungsstück
- 13: Halterung
- 14: Ventilelement (Quetschventil)
- 15: Quetschventilgehäuse
- 16: Anschluss am Filtergehäuse
- 17: Anschluss am Quetschventilgehäuse
- 100: Steuereinrichtung
- S1 - S8: Steuerventil

## Patentansprüche

1. Pulverförderkammer (2, 2') für eine Pulverdichtstrompumpe (1) zum Fördern von Pulver, insbesondere Beschichtungspulver, wobei die Pulverförderkammer (2, 2') mindestens eine Luftaustauschöffnung aufweist, welche insbesondere separat von einem Spülluftauslass des Endbereichs ausgeführt und ausgebildet ist, wechselweise mit einer Vakuumleitung bzw. Vakuumquelle oder mit einer Druckluftversorgungsleitung bzw. Druckluftquelle strömungsmäßig verbunden zu werden zum Einsaugen von Pulver in die Pulverförderkammer (2, 2') bzw. zum pneumatischen Ausstoßen einer in der Pulverförderkammer (2, 2') vorhandenen Pulverportion, wobei die Pulverförderkammer (2, 2') einen Endbereich aufweist, über den die Pulverförderkammer (2, 2') strömungsmäßig mit einer Pulverleitung (9) verbunden oder verbindbar ist, wobei der Endbereich der Pulverförderkammer (2, 2') als Übergangsbereich (8) ausgeführt und ausgebildet ist, einen effektiven Strömungsquerschnitt der Pulverförderkammer (2, 2') auf einen effektiven Strömungsquerschnitt der Pulverleitung (9) und/oder auf einen effektiven Strömungsquerschnitt eines zwischen der Pulverförderkammer (2, 2') und der Pulverleitung (9) angeordneten Ventils (6, 7), insbesondere Quetschventils, zu reduzieren, wobei dem Endbereich ein Spülsystem zugeordnet ist, über das dem Endbereich insbesondere bedarfsweise Spülluft in Gestalt von Druckluft zuführbar ist, um den Endbereich von Pulverablagerungen freizuhalten oder um Pulverablagerungen am Endbereich zu entfernen,
**dadurch gekennzeichnet, dass**
ein den Endbereich der Pulverförderkammer (2, 2') ausbildender Wandbereich des Endbereichs zumindest bereichsweise als ein für Druckluft durchlässiger, aber für Pulver undurchlässiger, poröser Wandbereich ausgebildet ist.

2. Pulverförderkammer (2, 2') nach Anspruch 1,
wobei der Endbereich der Pulverförderkammer (2, 2') mindestens einen Spülluftauslass aufweist zum bedarfsweisen Ausblasen der Spülluft in einem von der Pulverförderkammer (2, 2') und insbesondere von dem Übergangsbereich (8) definierten Pulverförderweg.

3. Pulverförderkammer (2, 2') nach Anspruch 1 oder 2,
wobei das Spülsystem ein zumindest bereichsweise sich insbesondere konisch verjüngendes Filterelement (10) aufweist, welches für Luft, aber nicht für Pulver durchlässig ist, wobei das Filterelement (10) in einem Filtergehäuse (11) aufgenommen oder aufnehmbar ist, welchem insbesondere bedarfsweise Spülluft in Gestalt von Druckluft zuführbar ist, wobei das Filterelement (10) mit seinem im Hinblick auf den Durchmesser größeren Endbereich mit einem Endbereich eines insbesondere zylinderförmigen Hauptkörperbereichs der Pulverförderkammer (2, 2') vorzugsweise lösbar verbunden oder verbindbar ist, und wobei das Filterelement (10) mit seinem im Hinblick auf den Durchmesser kleineren Endbereich mit einem Endbereich der Pulverleitung (9) oder mit einem Endbereich eines zwischen der Pulverförderkammer (2, 2') und der Pulverleitung (9) angeordneten Ventils (6, 7), insbesondere Quetschventils, vorzugsweise lösbar verbunden oder verbindbar ist.

4. Pulverförderkammer (2, 2') nach einem der Ansprüche 1 bis 3,
wobei dem Spülsystem eine Steuereinrichtung (100) zugeordnet ist, welche ausgebildet ist, bedarfsweise mindestens einen Spülluftauslass des Endbereichs der Pulverförderkammer (2, 2') mit einer Druckluftversorgungsleitung oder einer Druckluftquelle strömungsmäßig zu verbinden, wobei die Steuereinrichtung (100) insbesondere ausgebildet ist, in einem Reinigungsbetrieb den mindestens einen Spülluftauslass des Endbereichs der Pulverförderkammer (2, 2') mit der Druckluftversorgungsleitung oder der Druckluftquelle strömungsmäßig zu verbinden; und/oder
wobei die Steuereinrichtung (100) insbesondere ausgebildet ist, in einem Pulverausstoßzyklus der Pulverförderkammer (2, 2') den mindestens einen Spülluftauslass des Endbereichs der Pulverförderkammer (2, 2') mit der Druckluftversorgungsleitung oder der Druckluftquelle strömungsmäßig zu verbinden.

5. Pulverförderkammer (2, 2') nach Anspruch 4,
wobei die Steuereinrichtung (100) ausgebildet ist - insbesondere abhängig von einem Betriebszustand und/oder Betriebszyklus der Pulverförderpumpe - die pro Zeiteinheit dem mindestens einen Spülluftauslass des Endbereichs der Pulverförderkammer (2, 2') zuzuführende Menge an Druckluft einzustellen, wobei die Steuereinrichtung (100) insbesondere ausgebildet ist, in einem Reinigungsbetrieb dem mindestens einen Spülluftauslass des Endbereichs der Pulverförderkammer (2, 2') pro Zeiteinheit eine höhere Menge an Druckluft zuzuführen im Vergleich zu der pro Zeiteinheit dem mindestens einen Spülluftauslass im Pulverausstoßbetrieb zugeführten Menge an Druckluft.

6. Pulverförderkammer (2, 2') nach einem der Ansprüche 1 bis 5,
wobei der Endbereich der Pulverförderkammer (2, 2') über ein Ventil (6, 7), insbesondere Quetschventil, strömungsmäßig mit der Pulverleitung (9) verbunden oder verbindbar ist, wobei das Ventil (6, 7), insbesondere Quetschventil, in seinem geöffneten Zustand einen effektiven Strömungsquerschnitt aufweist, und wobei der Endbereich der Pulverförderkammer (2, 2') ausgebildet ist, einen effektiven Strömungsquerschnitt der Pulverförderkammer (2, 2') auf den effektiven Strömungsquerschnitt des Ventils (6, 7), insbesondere Quetschventils, in seinem geöffneten Zustand zu reduzieren; und/oder
wobei die Pulverförderkammer (2, 2') einen insbesondere zylinderförmigen Hauptkörperbereich (3) mit einem zumindest im Wesentlichen einheitlichen effektiven Strömungsquerschnitt aufweist; und/oder
wobei die Pulverförderkammer (2, 2') einen ersten Endbereich und einen gegenüberliegenden zweiten Endbereich aufweist, wobei die Pulverförderkammer (2, 2') über den ersten Endbereich strömungsmäßig mit einer ersten Pulverleitung (9) und über den zweiten Endbereich strömungsmäßig mit einer zweiten Pulverleitung (9) verbunden oder verbindbar ist, wobei der erste und/oder zweite Endbereich der Pulverförderkammer (2, 2') als Übergangsbereich (8) ausgeführt und ausgebildet sind/ist, einen effektiven Strömungsquerschnitt der Pulverförderkammer (2, 2') auf einen effektiven Strömungsquerschnitt der entsprechenden Pulverleitung (9) zu reduzieren, und wobei dem ersten und/oder zweiten Endbereich jeweils ein Spülsystem zugeordnet ist, über das dem jeweiligen Endbereich insbesondere bedarfsweise Spülluft in Gestalt von Druckluft zuführbar ist, um den entsprechenden Endbereich von Pulverablagerungen freizuhalten oder um Pulverablagerungen am Endbereich zu entfernen.

7. Pulverdichtstrompumpe (1) zum Fördern von Beschichtungspulver von einem ersten Pulverreservoir zu einem zweiten stromabwärts angeordneten Pulverreservoir oder einer stromabwärts angeordneten Pulversprühbeschichtungspistole oder dergleichen Einrichtung zum Versprühen von Beschichtungspulver, wobei die Pulverdichtstrompumpe (1) mindestens eine Pulverförderkammer (2, 2') nach einem der Ansprüche 1 bis 6 aufweist, welche über einen Pulvereinlass mit dem ersten Pulverreservoir und über einen Pulverauslass mit dem zweiten Pulverreservoir bzw. mit der Pulversprühbeschichtungspistole oder dergleichen Einrichtung zum Versprühen von Beschichtungspulver strömungsmäßig verbunden oder verbindbar ist, wobei am Pulvereinlass mindestens ein Pulvereinlassventil (6) und am Pulverauslass mindestens ein Pulverauslassventil (7) vorgesehen ist.

8. Pulverdichtstrompumpe (1) nach Anspruch 7,
wobei das mindestens eine Pulvereinlassventil (6) und das mindestens eine Pulverauslassventil (7) im jeweils geöffneten Zustand einen zumindest im Wesentlichen gleichen effektiven Strömungsquerschnitt aufweisen; oder wobei im geöffneten Zustand des Pulvereinlassventils (6) dieses einen effektiven Strömungsquerschnitt aufweist, welcher größer ist als ein effektiver Strömungsquerschnitt des Pulverauslassventils (7) in seinem geöffneten Zustand.

9. Pulverdichtstrompumpe (1) nach Anspruch 7 oder 8,
wobei die Pulverdichtstrompumpe (1) als Ein-Kammer-Pulverdichtstrompumpe (1) ausgebildet ist und zur Förderung von Beschichtungspulver nur eine einzige Pulverförderkammer (2, 2') aufweist; oder
wobei die Pulverdichtstrompumpe (1) als Mehr-Kammer-Pulverdichtstrompumpe (1) ausgebildet ist und zur Förderung von Beschichtungspulver eine Vielzahl parallel zueinander geschalteter Pulverförderkammern aufweist.

10. Pulverdichtstrompumpe (1) nach einem der Ansprüche 7 bis 9,
wobei die mindestens eine Pulverförderkammer (2, 2') an einem ersten Endbereich den Pulvereinlass und an einem gegenüberliegenden zweiten Endbereich den Pulverauslass aufweist, wobei das mindestens eine Pulvereinlassventil (6) und das mindestens eine Pulverauslassventil (7) jeweils an gegenüberliegenden Endbereichen der mindestens einen Pulverförderkammer (2, 2') angeordnet sind; oder
wobei die mindestens eine Pulverförderkammer (2, 2') an einem Endbereich einen Pulverdurchgang aufweist, der sowohl als Pulvereinlass als auch als Pulverauslass dient, wobei das mindestens eine Pulvereinlassventil (6) und das mindestens eine Pulverauslassventil (7) jeweils in dem Pulverdurchgang vorgesehen sind, wobei vorzugsweise ferner ein Verteiler, insbesondere in Gestalt eines Y-Stücks, vorgesehen ist zum strömungsmäßigen Verbinden des Pulverdurchgangs der mindestens einen Pulverförderkammer (2, 2') mit dem mindestens einen Pulvereinlassventil (6) einerseits und dem mindestens einen Pulverauslassventil (7) andererseits.

11. Pulverdichtstrompumpe (1) nach einem der Ansprüche 7 bis 10, wobei ferner eine Steuereinrichtung (100) vorgesehen ist zum Ansteuern des mindestens einen Pulvereinlassventils (6) und/oder des mindestens einen Pulverauslassventils (7) sowie zum abwechselnden Anlegen eines Überdrucks und eines Unterdrucks in der mindestens einen Pulverförderkammer (2, 2'), wobei vorzugsweise das mindestens eine Pulvereinlassventil (6) und das mindestens eine Pulverauslassventil (7) separat voneinander ansteuerbar sind; und/oder
wobei das mindestens eine Pulvereinlassventil (6) und das mindestens eine Pulverauslassventil (7) jeweils als Quetschventil ausgebildet sind, vorzugsweise von der Art, welche einen flexiblen elastischen Schlauch (14) als Ventilkanal aufweist, welcher zum Schließen des entsprechenden Ventils (6, 7) mittels Betätigungsdruckluft in einer den Schlauch (14) umgebenden Druckkammer (15) zusammenquetschbar ist; und/oder
wobei eine Steuereinrichtung (100) vorgesehen ist, welche ausgebildet ist, wechselweise mindestens eine Luftaustauschöffnung der mindestens einen Pulverförderkammer (2, 2') mit einer Vakuumleitung oder Vakuumquelle zu verbinden zum Einsaugen von Beschichtungspulver in die mindestens eine Pulverförderkammer (2, 2') durch das mindestens eine offene Pulvereinlassventil (6), während das mindestens eine Pulverauslassventil (7) geschlossen ist, oder mit einer Druckluftversorgungsleitung oder einer Druckluftquelle zu verbinden zum pneumatischen Ausstoßen einer in der mindestens einen Pulverförderkammer (2, 2') vorhandenen Pulverportion durch das mindestens eine offene Pulverauslassventil (7), während das mindestens eine Pulvereinlassventil (6) geschlossen ist.

12. Pulverdichtstrompumpe (1) nach einem der Ansprüche 7 bis 11,
wobei ferner mindestens eine Zusatzdruckluft-Einlassvorrichtung an mindestens einer Stelle in den Pulverweg nach dem mindestens einen Pulverauslassventil (7) mündet zum bedarfsweisen Zuführen von Zusatzdruckluft als zusätzliche Transportdruckluft, wobei die Zusatzdruckluft-Einlassvorrichtung insbesondere an mindestens einer Stelle in den Pulverweg zwischen dem Pulverauslassventil (7) und dem Pulverauslass der Pulverdichtstrompumpe (1) mündet.

13. Pulverdichtstrompumpe (1) nach Anspruch 12,
wobei die Zusatzdruckluft-Einlassvorrichtung ausgebildet ist, Zusatzdruckluft pulsierend in den Pulverweg einzuleiten.

14. Pulverdichtstrompumpe (1) nach Anspruch 12 oder 13,
wobei ferner eine Vorrichtung zum Zuführen von pulsierender Zusatzdruckluft zu der mindestens einen Zusatzdruckluft-Einlassvorrichtung vorgesehen ist, wobei die Pulsfrequenz der Zusatzdruckluft mindestens gleichgroß ist wie die Frequenz der mindestens einen Pulverförderkammer (2, 2'), mit welcher Pulverportionen von der mindestens einen Pulverförderkammer (2, 2') abgegeben werden.

15. Pulverdichtstrompumpe (1) nach Anspruch 14,
wobei die Pulsfrequenz der Zusatzdruckluft gleichgroß ist wie die Frequenz der mindestens einen Pulverförderkammer (2, 2'), mit welcher Pulverportionen von der Pulverförderkammer (2, 2') abgegeben werden, und wobei die Vorrichtung zum Zuführen von pulsierender Zusatzdruckluft zu der mindestens einen Zusatzdruckluft-Einlassvorrichtung ausgebildet ist, die Zusatzdruckluft der mindestens einen Zusatzdruckluft-Einlassvorrichtung im Hinblick auf den Pulverabgabezyklus der mindestens einen Pulverförderkammer (2, 2') gegenphasig zuzuführen.

## Claims

1. A powder conveying chamber (2, 2') for a dense phase powder pump (1) for conveying powder, in particular coating powder, wherein the powder conveying chamber (2, 2') comprises at least one air exchange opening which is in particular designed and formed separately from a cleaning air outlet of the end region for alternately connecting fluidly to a vacuum line or vacuum source, respectively, or to a compressed air supply line or compressed air source, respectively for drawing powder into the powder conveying chamber (2, 2'), or, respectively, pneumatically expelling a portion of powder present within the powder conveying chamber (2, 2'), wherein the powder conveying chamber (2, 2') comprises an end region via which the powder conveying chamber (2, 2') is fluidly connected or connectable to a powder line (9), wherein the end region of the powder conveying chamber (2, 2') is configured as a transition region (8) and designed to reduce an effective sectional area of flow of the powder conveying chamber (2, 2') to an effective sectional area of flow of the powder line (9) and/or to an effective sectional area of flow of a valve (6, 7), in particular a pinch valve, arranged between the powder conveying chamber (2, 2') and the powder line (9), wherein the end region is allocated a cleaning system via which cleaning air in the form of compressed air can be supplied to the end region, particularly as necessary, in order to keep the end region free of powder deposits or to remove powder deposits at the end region,
**characterized in that**
a wall area of the end region forming the end region of the powder conveying chamber (2, 2') is designed at least partly as a porous wall area permeable to compressed air but not permeable to powder.

2. The powder conveying chamber (2, 2') according to claim 1,
wherein the end region of the powder conveying chamber (2, 2') has at least one cleaning air outlet for blowing out the cleaning air as needed in a powder conveying path defined by the powder conveying chamber (2, 2') and in particular by the transition region (8).

3. The powder conveying chamber (2, 2') according to claim 1 or 2,
wherein the cleaning system has a filter element (10) at least in part tapering in particular conically which is permeable to air but not to powder, wherein the filter element (10) is or can be accommodated in a filter housing (11) able to be supplied with cleaning air in the form of compressed air, particularly as necessary, wherein the filter element (10) is or can be preferably releasably connected to an end region of an in particular cylindrical main body region of the powder conveying chamber (2, 2') by its larger end region in terms of diameter, and wherein the filter element (10) is or can be preferably releasably connected to an end region of the powder line (9) or to an end region of a valve (6, 7), in particular a pinch valve, arranged between the powder conveying chamber (2, 2') and the powder line (9) by its smaller end region in terms of diameter.

4. The powder conveying chamber (2, 2') according to one of claims 1 to 3, wherein a control device (100) is assigned to the cleaning system which is designed to fluidly connect at least one cleaning air outlet of the end region of the powder conveying chamber (2, 2') to a compressed air supply line or a compressed air source when needed, wherein the control device (100) is in particular designed to fluidly connect the at least one cleaning air outlet of the end region of the powder conveying chamber (2, 2') to the compressed air supply line or the compressed air source during a cleaning operation; and/or
wherein the control device (100) is in particular designed to fluidly connect the at least one cleaning air outlet of the end region of the powder conveying chamber (2, 2') to the compressed air supply line or compressed air source during a powder output cycle of the powder conveying chamber (2, 2').

5. The powder conveying chamber (2, 2') according to claim 4,
wherein the control device (100) is designed to regulate - particularly as a function of an operating state and/or operating cycle of the powder conveying pump - the volume of compressed air to be supplied to the at least one cleaning air outlet of the end region of the powder conveying chamber (2, 2') per unit of time, wherein the control device (100) is in particular designed to supply a higher volume of compressed air per unit of time to the at least one cleaning air outlet of the end region of the powder conveying chamber (2, 2') during a cleaning operation compared to the volume of compressed air to be supplied to the at least one cleaning air outlet per unit of time during the powder output mode.

6. The powder conveying chamber (2, 2') according to one of claims 1 to 5, wherein the end region of the powder conveying chamber (2, 2') is fluidly connected or connectable to the powder line (9) by means of a valve (6, 7), in particular a pinch valve, wherein the valve (6, 7), particularly pinch valve, exhibits an effective sectional area of flow in its open state, and wherein the end region of the powder conveying chamber (2, 2') is designed to reduce an effective sectional area of flow of the powder conveying chamber (2, 2') to the effective sectional area of flow of the valve (6, 7), particularly pinch valve, in its open state; and/or
wherein the powder conveying chamber (2, 2') comprises an in particular cylindrical main body region (3) having an at least substantially uniform effective sectional area of flow; and/or
wherein the powder conveying chamber (2, 2') has a first end region and an oppositely disposed second end region, wherein the powder conveying chamber (2, 2') is or can be fluidly connected to a first powder line (9) via the first end region and is or can be fluidly connected to a second powder line (9) via the second end region, wherein the first and/or second end region of the powder conveying chamber (2, 2') is/are implemented as a transition region (8) and designed to reduce an effective sectional area of flow of the powder conveying chamber (2, 2') to an effective sectional area of flow of the corresponding powder line (9), and wherein a cleaning system is in each case allocated to the first and/or second end region via which cleaning air in the form of compressed air can be supplied to the respective end region, particularly as necessary, in order to keep the respective end region free of powder deposits or to remove powder deposits at the end region.

7. A dense phase powder pump (1) for conveying coating powder from a first powder reservoir to a second downstream powder reservoir or to a downstream powder spray coating gun or similar device for spraying coating powder, wherein the dense phase powder pump (1) has at least one powder conveying chamber (2, 2') according to one of claims 1 to 6 which is fluidly connected or connectable to the first powder reservoir via a powder inlet and to the second powder reservoir, or to the powder spray coating gun or similar device for spraying coating powder respectively, via a powder outlet, wherein at least one powder inlet valve (6) is provided at the powder inlet and at least one powder outlet valve (7) is provided at the powder outlet.

8. The dense phase powder pump (1) according to claim 7,
wherein the at least one powder inlet valve (6) and the at least one powder outlet valve (7) have at least substantially the same effective sectional area of flow in their respective open state; or
wherein the powder inlet valve (6) exhibits a larger effective sectional area of flow in the open state than an effective sectional area of flow of the powder outlet valve (7) in its open state.

9. The dense phase powder pump (1) according to claim 7 or 8, wherein the dense phase powder pump (1) is designed as a single-chamber dense phase powder pump (1) and only has a single powder conveying chamber (2, 2') for the conveyance of coating powder; or
wherein the dense phase powder pump (1) is designed as a multi-chamber dense phase powder pump (1) and has a plurality of powder conveying chambers connected in parallel to each other for the conveyance of coating powder.

10. The dense phase powder pump (1) according to one of claims 7 to 9, wherein the at least one powder conveying chamber (2, 2') has the powder inlet at a first end region and the powder outlet at an oppositely disposed second end region, wherein the at least one powder inlet valve (6) and at least one powder outlet valve (7) are arranged at respectively opposite end regions of the at least one powder conveying chamber (2, 2'); or
wherein the at least one powder conveying chamber (2, 2') has a powder duct at one end region which serves both as a powder inlet as well as a powder outlet, wherein the at least one powder inlet valve (6) and at least one powder outlet valve (7) are in each case provided in the powder duct, wherein preferably a distributor, particularly in the form of a Y-piece, is furthermore provided for fluidly connecting the powder duct of the at least one powder conveying chamber (2, 2') to the at least one powder inlet valve (6) on one side and the at least one powder outlet valve (7) on the other.

11. The dense phase powder pump (1) according to one of claims 7 to 10, wherein a control device (100) is furthermore provided to control the at least one powder inlet valve (6) and/or the at least one powder outlet valve (7) as well as to alternately apply positive pressure and negative pressure in the at least one powder conveying chamber (2, 2'), wherein preferably the at least one powder inlet valve (6) and the at least one powder outlet valve (7) are separately controllable; and/or
wherein the at least one powder inlet valve (6) and the at least one powder outlet valve (7) are each designed as a pinch valve, preferably of the style having a flexible elastic hose (14) as a valve channel which is able to be squeezed together in a pressure chamber (15) surrounding the hose (14) by means of actuating compressed air in order to close the corresponding valve (6, 7); and/or
wherein a control device (100) is provided which is designed to alternately connect at least one air exchange opening of the at least one powder conveying chamber (2, 2') to a vacuum line or vacuum source for drawing coating powder into the at least one powder conveying chamber (2, 2') through the at least one open powder inlet valve (6) while the at least one powder outlet valve (7) is closed or to a compressed air supply line or compressed air source for pneumatically expelling a portion of powder present within the at least one powder conveying chamber (2, 2') through the at least one open powder outlet valve (7) while the at least one powder inlet valve (6) is closed.

12. The dense phase powder pump (1) according to one of claims 7 to 11, wherein at least one auxiliary compressed air inlet device furthermore empties into the powder path at least at a location after the at least one powder outlet valve (7) for supplying auxiliary compressed air as supplementary conveying compressed air when needed, wherein the auxiliary compressed air inlet device in particular empties into the powder path at least at a location between the powder outlet valve (7) and the powder outlet of the dense phase powder pump (1).

13. The dense phase powder pump (1) according to claim 12,
wherein the auxiliary compressed air inlet device is designed to introduce auxiliary compressed air into the powder path in a pulsating flow.

14. The dense phase powder pump (1) according to claim 12 or 13,
wherein a device for supplying pulsating auxiliary compressed air to the at least one auxiliary compressed air inlet device is further provided, wherein the pulse frequency of the auxiliary compressed air is at least the same as the frequency of the at least one powder conveying chamber (2, 2') at which portions of powder are dispensed from the at least one powder conveying chamber (2, 2').

15. The dense phase powder pump (1) according to claim 14,
wherein the pulse frequency of the auxiliary compressed air is the same as the frequency of the at least one powder conveying chamber (2, 2') at which portions of powder are dispensed from the powder conveying chamber (2, 2'), and wherein the device for supplying pulsating auxiliary compressed to the at least one auxiliary compressed air inlet device is designed such that the auxiliary compressed air is supplied to the at least one auxiliary compressed air inlet device in phase opposition with respect to the powder dispensing cycle of the at least one powder conveying chamber (2, 2').

## Revendications

1. Chambre de refoulement de poudre (2, 2') pour une pompe de flux de poudre en phase dense (1) destinée à refouler une poudre, en particulier une poudre pour revêtement, dans laquelle la chambre de refoulement de poudre (2, 2') présente au moins une ouverture d'échange d'air qui est configurée et réalisée, en particulier séparément d'une sortie d'échange d'air de la zone d'extrémité, pour être connectée en alternance en communication fluidique à une conduite de vide ou source de vide ou à une conduite d'approvisionnement d'air comprimé ou source d'air comprimé pour une aspiration de poudre dans la chambre de refoulement de poudre (2, 2') ou pour une expulsion pneumatique d'une portion de poudre présente dans la chambre de refoulement de poudre (2, 2'), dans laquelle la chambre de refoulement de poudre (2, 2') présente une zone d'extrémité par l'intermédiaire de laquelle la chambre de refoulement de poudre (2, 2') est connectée ou peut être connectée en communication fluidique à une conduite de poudre (9), dans laquelle la zone d'extrémité de la chambre de refoulement de poudre (2, 2') est configurée et réalisée, en tant que zone de transition (8), pour réduire une section transversale d'écoulement effective de la chambre de refoulement de poudre (2, 2') à une section transversale d'écoulement effective de la conduite de poudre (9) et/ou à une section transversale d'écoulement effective d'une vanne (6, 7), en particulier d'une vanne à écrasement, agencée entre la chambre de refoulement de poudre (2, 2') et la conduite de poudre (9), dans laquelle il est associé à la zone d'extrémité un système de purge par l'intermédiaire duquel de l'air de purge peut être alimenté à la zone d'extrémité, en particulier en fonction des besoins, sous forme d'air comprimé, pour garder la zone d'extrémité exempte de dépôts de poudre ou pour éliminer les dépôts de poudre au niveau de la zone d'extrémité,
**caractérisé en ce que**
une zone de paroi de la zone d'extrémité, formant la zone d'extrémité de la chambre de refoulement de poudre (2, 2'), est réalisée au moins en partie en tant que zone de paroi poreuse, perméable à l'air comprimé, mais imperméable à la poudre.

2. Chambre de refoulement de poudre (2, 2') selon la revendication 1, dans laquelle la zone d'extrémité de la chambre de refoulement de poudre (2, 2') présente au moins une sortie d'air de purge pour souffler en fonction des besoins l'air de purge dans un trajet de refoulement de poudre défini par la chambre de refoulement de poudre (2, 2') et en particulier par la zone de transition (8).

3. Chambre de refoulement de poudre (2, 2') selon la revendication 1 ou 2, dans laquelle le système de purge présente un élément de filtre (10) se rétrécissant au moins en partie d'une manière en particulier conique, qui est perméable à l'air, mais pas à la poudre, dans laquelle l'élément de filtre (10) est reçu ou peut être reçu dans un boîtier de filtre (11) auquel de l'air de purge peut être alimenté, en particulier en fonction des besoins, sous forme d'air comprimé, dans laquelle l'élément de filtre (10) est connecté ou peut être connecté, de préférence de manière détachable, avec sa zone d'extrémité la plus grande, par rapport au diamètre, à une zone d'extrémité d'une zone de corps principal, en particulier de forme cylindrique, de la chambre de refoulement de pompe (2, 2'), et dans laquelle l'élément de filtre (10) est connecté ou peut être connecté, de préférence de manière détachable, avec sa zone d'extrémité la plus petite, par rapport au diamètre, à une zone d'extrémité de la conduite de poudre (9) ou à une zone d'extrémité d'une vanne (6, 7), en particulier d'une vanne à écrasement, agencée entre la chambre de refoulement de poudre (2, 2') et la conduite de poudre (9).

4. Chambre de refoulement de poudre (2, 2') selon l'une quelconque des revendications 1 à 3,
dans laquelle il est associé au système de purge un moyen de commande (100) qui est réalisé pour connecter en communication fluidique, en fonction des besoins, au moins une sortie d'air de purge de la zone d'extrémité de la chambre de refoulement de poudre (2, 2') à une conduite d'approvisionnement d'air comprimé ou à une source d'air comprimé, dans laquelle le moyen de commande (100) est en particulier réalisé pour connecter en communication fluidique, dans un fonctionnement de nettoyage, ladite au moins une sortie d'air de purge de la zone d'extrémité de la chambre de refoulement de poudre (2, 2') à la conduite d'approvisionnement d'air comprimé ou à la source d'air comprimé ; et/ou dans laquelle le moyen de commande (100) est en particulier réalisé pour connecter en communication fluidique, dans un cycle d'expulsion de poudre de la chambre de refoulement de poudre (2, 2'), ladite au moins une sortie d'air de purge de la zone d'extrémité de la chambre de refoulement de poudre (2, 2') à la conduite d'approvisionnement d'air comprimé ou à la source d'air comprimé.

5. Chambre de refoulement de poudre (2, 2') selon la revendication 4, dans laquelle le moyen de commande (100) est réalisé - en particulier en dépendance d'un état de fonctionnement et/ou d'un cycle de fonctionnement de la pompe de refoulement de poudre - pour régler la quantité d'air comprimé devant être alimentée à ladite au moins une sortie d'air de purge de la zone d'extrémité de la chambre de refoulement de poudre (2, 2') par unité de temps, dans laquelle le moyen de commande (100) est en particulier réalisé pour alimenter une quantité d'air à ladite au moins une sortie d'air de purge de la zone d'extrémité de la chambre de refoulement de poudre (2, 2') par unité de temps qui est plus élevée dans un fonctionnement de nettoyage qu'une quantité d'air comprimée alimentée à ladite au moins une sortie d'air de purge dans le fonctionnement d'expulsion de poudre par unité de temps.

6. Chambre de refoulement de poudre (2, 2') selon l'une quelconque des revendications 1 à 5,
dans laquelle la zone d'extrémité de la chambre de refoulement de poudre (2, 2') est connectée ou peut être connectée en communication fluidique à la conduite de poudre (9) par l'intermédiaire d'une vanne (6, 7), en particulier d'une vanne à écrasement, dans laquelle la vanne (6, 7), en particulier la vanne à écrasement, présente une section transversale d'écoulement réelle dans son état ouvert, et dans laquelle la zone d'extrémité de la chambre de refoulement de poudre (2, 2') est réalisée pour réduire une section transversale d'écoulement effective de la chambre de refoulement de poudre (2, 2') à la section transversale d'écoulement effective de la vanne (6, 7), en particulier de la vanne à écrasement, dans son état ouvert ; et/ou
dans laquelle la chambre de refoulement de poudre (2, 2') présente une zone de corps principal (3), en particulier de forme cylindrique, avec une section transversale d'écoulement effective au moins sensiblement uniforme ; et/ou
dans laquelle la chambre de refoulement de poudre (2, 2') présente une première zone d'extrémité et une seconde zone d'extrémité opposée, dans laquelle la chambre de refoulement de poudre (2, 2') est connectée ou peut être connectée, par l'intermédiaire de la première zone d'extrémité, en communication fluidique à une première conduite de poudre (9) et, par l'intermédiaire de la seconde zone d'extrémité, en communication fluidique à une seconde conduite de poudre (9), dans laquelle la première ou la seconde zone d'extrémité de la chambre de refoulement de poudre (2, 2') est configurée et réalisée en tant que zone de transition (8) pour réduire une section transversale d'écoulement effective de la chambre de refoulement de poudre (2, 2') à une section transversale d'écoulement effective de la conduite de poudre (9) correspondante, et dans laquelle il est associé à la première et/ou à la seconde zone d'extrémité, respectivement, un système de purge par l'intermédiaire duquel de l'air de purge peut être alimenté à la zone d'extrémité respective, en particulier en fonction des besoins, sous forme d'air comprimé, pour garder la zone d'extrémité exempte de dépôts de poudre ou pour éliminer les dépôts de poudre au niveau de la zone d'extrémité.

7. Pompe de flux de poudre en phase dense (1) destinée à refouler une poudre pour revêtement depuis un premier réservoir à poudre jusqu'à un second réservoir à poudre agencé en aval ou jusqu'à un pistolet de revêtement par pulvérisation de poudre ou un moyen similaire de pulvérisation de poudre pour revêtement agencés en aval, dans laquelle la pompe de flux de poudre en phase dense (1) présente au moins une chambre de refoulement de poudre (2, 2') selon l'une quelconque des revendications 1 à 6, qui est connectée ou peut être connectée en aval, par l'intermédiaire d'une entrée de poudre, en communication fluidique au premier réservoir et, par l'intermédiaire d'une sortie de poudre, au second réservoir à poudre ou au moyen similaire de pulvérisation de poudre pour revêtement, dans laquelle il est prévu, au niveau de l'entrée de poudre, au moins une vanne d'entrée de poudre (6) et, au niveau de la sortie de poudre, au moins une vanne de sortie de poudre (7).

8. Pompe de flux de poudre en phase dense (1) selon la revendication 7, dans laquelle ladite au moins une vanne d'entrée de poudre (6) et ladite au moins une vanne de sortie de poudre (7), dans l'état ouvert respectif, présentent une section transversale d'écoulement effective au moins sensiblement identique ; ou
dans laquelle, dans l'état ouvert de la vanne d'entrée de poudre (6), celle-ci présente une section transversale d'écoulement effective plus grande qu'une section transversale d'écoulement effective de la vanne de sortie de poudre (7) dans son état ouvert.

9. Pompe de flux de poudre en phase dense (1) selon la revendication 7 ou 8, dans laquelle la pompe de flux de poudre en phase dense (1) est réalisée en tant que pompe de flux de poudre en phase dense (1) à une chambre et présente une seule chambre de refoulement de poudre (2, 2') pour refouler la poudre pour revêtement ; ou
dans laquelle la pompe de flux de poudre en phase dense (1) ) est réalisée en tant que pompe de flux de poudre en phase dense (1) à plusieurs chambres et présente une pluralité de chambres de refoulement de poudre montées en parallèle les unes aux autres pour refouler la poudre pour revêtement.

10. Pompe de flux de poudre en phase dense (1) selon l'une quelconque des revendications 7 à 9,
dans laquelle ladite au moins une chambre de refoulement de poudre (2, 2') présente l'entrée de poudre au niveau d'une première zone d'extrémité et la sortie de poudre au niveau d'une seconde zone d'extrémité opposée, dans laquelle ladite au moins une vanne d'entrée de poudre (6) et ladite au moins une vanne de sortie de poudre (7) sont chacune agencées au niveau de zones d'extrémité opposées de ladite au moins une chambre de refoulement de poudre (2, 2') ; ou
dans laquelle ladite au moins une chambre de refoulement de poudre (2, 2') présente, au niveau d'une zone d'extrémité, un passage de poudre qui sert à la fois d'entrée de poudre et de sortie de poudre, dans laquelle ladite au moins une vanne d'entrée de poudre (6) et ladite au moins une vanne de sortie de poudre (7) sont prévues chacune dans le passage de poudre, dans laquelle il est prévu en outre un distributeur, en particulier sous forme de pièce en Y, pour connecter en communication fluidique le passage de poudre de ladite au moins une chambre de refoulement de poudre (2, 2') à ladite au moins une vanne d'entrée de poudre (6) d'un côté et à ladite au moins une vanne de sortie de poudre (7) de l'autre côté.

11. Pompe de flux de poudre en phase dense (1) selon l'une quelconque des revendications 7 à 10,
dans laquelle il est prévu en outre un dispositif de commande (100) pour piloter ladite au moins une vanne d'entrée de poudre (6) et/ou ladite au moins une vanne de sortie de poudre (7), et pour appliquer en alternance une sous-pression et une surpression dans ladite au moins une chambre de refoulement de poudre (2, 2'), dans laquelle de préférence ladite au moins une vanne d'entrée de poudre (6) et ladite au moins une vanne de sortie de poudre (7) peuvent être pilotées séparément l'une de l'autre ; et/ou
dans laquelle ladite au moins une vanne d'entrée de poudre (6) et ladite au moins une vanne de sortie de poudre (7) sont réalisées chacune comme vannes à écrasement, de préférence du type qui présente un tuyau élastique flexible (14) en tant que canal de vanne, qui peut être écrasé pour fermer la vanne correspondante (6, 7) au moyen d'un air comprimé d'actionnement dans une chambre de pression (15) entourant le tuyau (14) ; et/ou
dans laquelle il est prévu un moyen de commande (100) qui est réalisé pour connecter en alternance au moins une ouverture de sortie d'air de ladite au moins une chambre de refoulement de poudre (2, 2') à une conduite de vide ou à une source de vide pour une aspiration de la poudre pour revêtement dans ladite au moins une chambre de refoulement de poudre (2, 2) à travers ladite au moins une vanne d'entrée de poudre (6) ouverte, tandis que ladite au moins une vanne de sortie de poudre (7) est fermée, ou à une conduite d'approvisionnement d'air comprimé ou à une source d'air comprimée pour une expulsion pneumatique d'une portion de poudre présente dans ladite au moins une chambre de refoulement de poudre (2, 2') à travers ladite au moins une vanne de sortie de poudre (7) ouverte, tandis que ladite au moins une vanne d'entrée d'air (6) est fermée.

12. Pompe de flux de poudre en phase dense (1) selon l'une quelconque des revendications 7 à 11,
dans laquelle en outre au moins un dispositif d'entrée d'air comprimé supplémentaire débouche, à au moins un endroit dans la trajet de poudre, après ladite au moins une vanne de sortie de poudre (7) pour alimenter en fonction des besoins de l'air comprimé supplémentaire en tant qu'air comprimé de transport supplémentaire, dans laquelle le dispositif d'entrée d'air comprimé supplémentaire débouche en particulier, à au moins un endroit dans le trajet d'écoulement, entre la vanne de sortie de poudre (7) et la sortie de poudre de la pompe de flux de poudre en phase dense (1).

13. Pompe de flux de poudre en phase dense (1) selon la revendication 12, dans laquelle le dispositif d'entrée d'air comprimé supplémentaire est réalisé pour introduire de l'air comprimé supplémentaire pulsé dans le trajet de poudre.

14. Pompe de flux de poudre en phase dense (1) selon la revendication 12 ou 13,
dans laquelle il est prévu en outre un dispositif pour alimenter de l'air comprimé supplémentaire pulsé audit au moins un dispositif d'entrée d'air comprimé supplémentaire, la fréquence d'impulsions de l'air comprimé supplémentaire étant au moins égale à la fréquence de ladite au moins une chambre de refoulement de poudre (2, 2') avec laquelle des portions de poudre sont déchargées de ladite au moins une chambre de refoulement de pompe (2, 2').

15. Pompe de flux de poudre en phase dense (1) selon la revendication 14, dans laquelle la fréquence d'impulsions de l'air comprimé supplémentaire est égale à la fréquence de ladite au moins une chambre de refoulement de poudre (2, 2') avec laquelle des portions de poudre sont déchargées de ladite au moins une chambre de refoulement de pompe (2, 2'), et dans laquelle le dispositif pour alimenter de l'air comprimé supplémentaire pulsé audit au moins un dispositif d'entrée d'air comprimé supplémentaire est réalisé pour alimenter en opposition de phase l'air comprimé supplémentaire dudit au moins un dispositif d'entrée d'air comprimé supplémentaire compte tenu du cycle de décharge de de ladite au moins une chambre de refoulement de poudre (2, 2').
